# EUROPEAN PATENT SPECIFICATION

(11) **EP 3 296 088 B1**
(45) Date of publication and mention of the grant of the patent: **07.08.2019**
(21) Application number: 17191117.5
(22) Date of filing: 14.09.2017
(51) Int. Cl.: B29C 70/44

(54) **METHOD AND INFUSION APPARATUS FOR PRODUCING BODIES MADE OF A REINFORCED COMPOSITE MATERIAL**
VERFAHREN UND INFUSIONSVORRICHTUNG ZUR HERSTELLUNG VON KÖRPERN AUS FASERVERSTÄRKTEM VERBUNDSTOFFMATERIAL
PROCÉDÉ ET APPAREIL D'INFUSION POUR PRODUIRE DES CORPS EN MATÉRIAU COMPOSITE RENFORCÉ

(30) Priority: 16.09.2016 IT 201600093472
(43) Date of publication of application: 21.03.2018
(73) Proprietor: Afros S.p.A., 20121 Milano (IT)
(72) Inventor: Volpato, Marco, 20121 Milan (IT); Bonansea, Alberto, 20121 Milan (IT)
(74) Representative: Candito, Rocco

(56) References cited:
- WO-A1-2013/072074
- DE-A1-102011 051 236
- GB-A- 2 403 179
- US-A1- 2010 124 654
- US-A1- 2014 131 916

## Description

### BACKGROUND OF THE INVENTION

The present invention relates to a method and an apparatus for obtaining, by infusion of a reactive mixture in vacuum conditions, of a body made of a composite material reinforced with fibres, such as a wind turbine blade, a hull, structures of tanks and swimming pools and other structures of medium or large dimensions.

### PRIOR ART

In the field of producing bodies of large dimensions made of composite material reinforced with fibres, a technology is known for infusion of resin (such as unsaturated polyester, vinyl esters, epoxy resin, polyurethane) in a vacuum condition that comprises the following operations.

There is first of all a laying operation, on a mould that is generally upwardly concave, of one or more layers of woven glass fibres or glass fibres in crossed directions, intended for being impregnated by the resin.

To the surface outside the mould, above the fibres, a sheet or film of transparent plastics is applied that acts as a barrier for the air and resin, which is peripherally connected sealingly to the mould by a biadhesive sealing tape or putty. Along the peripheral zone of this barrier film, air suction pipes are connected, provided with respective stopcocks, and connected to a vacuum pump to produce in the gap that is defined between the barrier film and the inner surface of the mould and houses the fibres, a vacuum condition that is generally less than 6 - 10 millibar absolute.

The internal depression subjects the barrier film to the action of the outer pressure, leading to the compacting of the layers of fibre, and also of the resin entering during impregnation, against the contrasting surface of the mould.

In the currently used systems, dosing units are used provided with gear pumps or pistons synchronised for ensuring the dosing in a desired stoichiometric ratio of resin and hardener.

The resin and the hardener, stored in suitable tanks, are removed and dosed by volumetric pumps to be sent to a mixing head.

The reactive mixture dispensed by the mixing head is poured into an open storage container in which the mixture is at atmospheric pressure.

The formulation of the reactive resin is such as to have a very slow reaction, with a significant and sufficient latency time to ensure that the reactive mixture remains for a long time in liquid state in the aforesaid open storage container.

In the open storage container, numerous pipes draw that are provided at the opposite end with elements entering the cavity that are sealingly connected to the surface of the barrier film of plastics and through which the reactive mixture can flow inside the infusion gap. Similarly, the pipes are connected to suck the aforesaid air.

The pressure difference between the open storage container and the infusion gap promotes the delivery and flow of the mixture of reactive resin inside the layers of fibre, thus giving rise to the step of impregnating the resin from several infusion points.

In the initial instants of delivering mixture, under each connecting and delivering element there is absolute pressure that is very near zero and this induces the reactive mixture to flow with a flowrate that is directly proportional to the pressure difference between the exterior and the interior of the infusion gap and is inversely proportional to the hydraulic resistance that the reactive mixture encounters along the respective infusion line and through the fibres below the barrier film.

The resin, by flowing progressively, expands to form an impregnation zone through the fibres of an almost circular shape with in the centre the connecting and delivering element. The progressively growing circular impregnation zones come into reciprocal contact, subsequently taking on polygonal shapes.

During this diffusion phenomenon, the absolute pressure under each connecting and delivering element increases according to the growing hydraulic resistance encountered by the reactive resin during advancement and increases with the radius of the diffusion front. This absolute pressure, thus, from an initial value that is very close to zero, increases to approach the value of the atmospheric pressure with a law of almost exponential type over time.

Manual valves are provided by means of which an operator throttles and subsequently stops the transit of reactive mixture along the delivery conduits in each zone of interest.

The operator further closes the stopcocks located along the pipes of the vacuum as soon as the resin starts to flow that is drawn into the pipes by the vacuum.

The operator performs the throttling operations on the basis of a visual analysis of the expansion of the front of reactive resin that accompanies impregnating the zones below the transparent barrier film. Unfortunately, the degree of precision and correct execution of this throttling operation depends on the skill and experience of the operator, and this operation is rather laborious and expensive in time and money, especially in cases with numerous infusion points that inevitably are required to make structures of large dimensions. This constitutes a great limit to such known infusion systems.

Another limit of this known system is set by the difficulties of optimizing and distributing the hydraulic resistances and by the pressure losses that the mixture suffers during the journey from the open storage container to the infusion gap, and the disturbance arising from the jump in piezometric pressure that occurs when the open storage container is at a lower level than at the infusion points and entry into the infusion gap.

A further limit of this known system is connected to the problems that arise from the accumulation and storage of the reactive mixture in the open storage container (barrel or bucket).

A first problem relates to the vapours of volatile substances and to the odours and exhalations coming from the reactive mixture stored "open top", which have a negative impact on the quality of the work environment in which the operators find themselves and on the health of the operators.

Another limit is the fact that, in order to prevent the accumulation and reduction of latency of the reactive mixture leading to an activation of the chemical reaction and prematurely starting the hardening of the reactive resin, reduced quantities of mixture accumulated in the barrel are often worked with. In fact, it has been found that the greater the quantities of mixture contained in the barrel, the shorter the latency times, i.e. the more rapidly the self-heating of the mass of reactive resin occurs that anticipates the activation of the chemical reaction, which is affected by a "mass effect". For this reason, resin formulations have to be used that have low reactivity to long latency times.

In order to minimize the incidence of the aforesaid "mass effect", recourse is further made to using one or more open top containers for the reactive mixture and for the distribution thereof, and this is the more necessary, the greater the dimensions of the structures to be made are, with clear operating complications in the infusion process. Further, the inevitable presence of residues of hardened resin in the containers at the end of the process, in addition to wasting resin, entails the need of having to reclean or replace said containers, with clear expenditure of time and financial disadvantages.

Systems for molding reinforced composite structures are known from WO2013072074, DE102011051236, GB2403179, US2014131916 and US2010124654.

In the light of what has been set out above, it is clear that there is still great room for improvement of known infusion systems.

### OBJECTS OF THE INVENTION

One object of the present invention is to provide a method and an apparatus that is suitable for improving the technology in question that enables productivity to be increased to higher quality levels of the obtained product.

Another object is to provide a solution that makes possible optimised consumption of resin and a reduction of the problems connected with the residual existence of hardened resin at the end of an infusion process.

A further object is to provide a solution that is able to facilitate, to the operators, the infusion tasks, also improving working conditions and making the environment in which the operators have to operate healthier and safer.

### SHORT DESCRIPTION OF THE INVENTION

These objects and further advantages are achieved by a method and an apparatus as defined in the claims.

In particular, according to a first aspect of the invention, a method is provided according to what is defined by claim 1.

In a second aspect of the invention, an apparatus is provided, as defined in claim 18, to implement the aforesaid method.

Owing to the method and apparatus according to the invention, the drawbacks that are disclosed above of the conventional infusion systems are overcome and the set objects are achieved.

### SHORT DESCRIPTION OF THE DRAWINGS

These and further features of the method and of the apparatus will be clearer from the following description, with reference to the drawings, in which:
Figure 1 is a schematic view of the infusion apparatus according to present invention;
Figures 2 and 3 show enlarged details of the diagram of Figure 1;

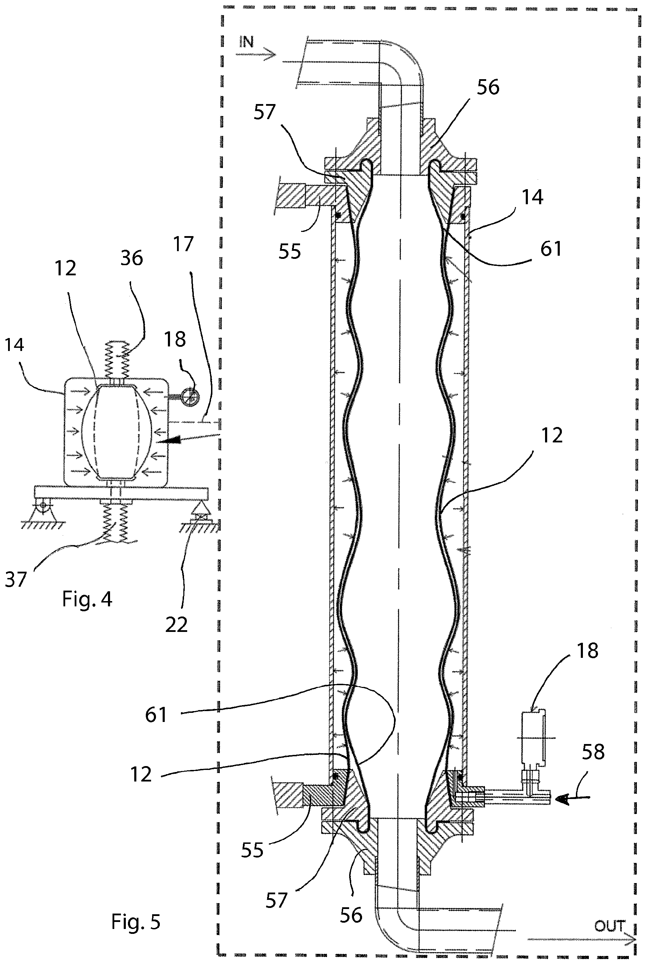

Figures 4 and 5 are enlarged details of an accumulation bag located in a pressurised container forming part of this infusion apparatus;
Figure 6 shows a throttling unit for the controlled adjustment of the transit of resin along a respective infusion line;
Figure 7 shows a nipple-shaped delivering element provided with a pressure sensor and suitable for being connected to a respective infusion line and for being positioned on the barrier film at an infusion connection;
Figures 8 and 9 show diagrams that show the pattern of certain pressure profiles according to some pressure profiles in function of the position reached by the infusion front of the reactive mixture, respectively in the case of a conventional system of known type and in the case of the apparatus according to the invention;
Figure 10 shows schematically a second embodiment of an apparatus that comprises a casing, of the autoclave type, inside which the body made of composite material is produced by the infusion process according to the invention;
Figure 11 is a diagram containing pressure profiles in the case of the apparatus with autoclave of Figure 10;
Figure 12 shows schematically a third embodiment of an apparatus comprising a pair of half moulds that, by suitable core elements of collapsable type, enable hollow bodies to be made as a single piece;
Figure 13 shows a diagram with pressure profiles relating to the embodiment of an apparatus of Figure 12.

### DETAILED DESCRIPTION OF THE INVENTION

With reference to the attached Figures, the apparatus 1 and the method according to the invention are described below for producing a body made of a composite material reinforced with fibres by infusion of a reactive mixture in vacuum conditions.

The reactive mixture is obtained by mixing, according to a suitable stoichiometric ratio, a resin A with a hardener component B.

The reactive resin can comprise an unsaturated polyester, vinyl ester, epoxy resin, polyurethane resin.

The present apparatus and infusion method are particularly suitable for making structures of composite material of large dimensions, such as hulls, wind turbine blades, structures of tanks, swimming pools, etc.

The apparatus 1 comprises a mould 4, which can be heated, having a contrasting surface 3 that can have a concave shape, or also another desired geometry or be configured as the enveloping surface of a hollow body, and on which one or more layers of fibres are spread that define a reinforcing fibrous support 5 intended for being impregnated with the reactive mixture.

The mould 4, in a first embodiment, is thus a mould that is open above. In a second embodiment, the mould 4 is enclosed in a suitably pressurised environment, for example inside a casing 71, of the autoclave type. In a further embodiment, the mould 4 is defined by a pair of half moulds 4a, 4b intended for being reciprocally closed and cooperating with collapsable internal elements 80 that act as cores for making hollow bodies as single pieces. In this case, the pressure on the surface of the layers of fibre is exerted by a removable collapsible element 80, which acts as an inner core to generate a hollow body in a single piece. In this case a film can be used to be applied to the fibres, to the entire surface of the fibres or to the zones not reached directly by the inner casing but onto which it can exert the transmission of inflating pressure by suitable interposed thickening elements; on the other hand in the zones in which the direct contact with the collapsible core elements 80 is established, the barrier film can be omitted and the fibres themselves are placed interposed between the forming surfaces of the half-moulds 4A, 4B and the surfaces of the collapsible core elements 80. Before infusion, a suitable detaching substance is applied to the collapsible forming surfaces to facilitate removal of the piece.

The reinforcing fibrous support 5 can comprise a bed or mat consisting of different superimposed layers of woven fibres or one-directional crossed fibres or fibres in the form of felt or matting, between which the resin infiltrates.

Onto the reinforcing fibrous support 5 a barrier film 6 or barrier sheet is spread that is made of transparent plastics that are impermeable to air or to resin.

The barrier film 6 can be sealed peripherally, by a biadhesive tape 50 having a putty or pasty consistency, against the surface of a perimeter zone 7 of the mould 4 that bounds the contrasting surface 3. Once the barrier film 6 is sealed to the mould 4, a gap or infusion cavity 8 is then defined that is separate from the outer environment.

On the barrier film 6, one or more inlet ports 9 are obtained for the reactive mixture.

The apparatus 1 includes a device 13, 30, 31 for dosing and mixing the resin A with the hardener B.

The resin A and the hardener B are stored in suitable cubic containers 33A, 33B of the so-called IBC type or in closed tanks that can be kept pressurised or at a pressure below outer atmospheric pressure to avoid incorporation of air.

The dosing device in particular comprises a mixing head 13, provided with a static mixer 34, with which volumetric pumps 30, 31 are operationally coupled for dosing and supplying respectively the resin A and the hardener B.

The speed of the volumetric pumps 30, 31 is controlled and can be of the type having brushless motors with suitable relative driving, or with motors of the alternating current type with inverter.

The apparatus 1 comprises a heat exchanger 16, located downstream of the volumetric pump 30, and arranged for thermostatting the resin component A before entry into the mixing head 13.

Thermostatting substantially affects only the resin A and not the hardener B, which appears in much reduced percentages in the final mixture.

With the mixing head 13 three-way valves 35A, 35B are coupled that recirculate to maintain the chemical components in movement before and after each dispensing, and transducers 60A, 60B to measure the flowrates of resin A and hardener B.

In the apparatus 1, a flexible accumulation bag 12 is provided, placed downstream of the static mixer 34, and arranged for receiving and containing the reactive mixture generated in the mixing head 13.

The accumulation bag 12, of the hose or bladder type, is made of a flexible material and acts as a storage container for the mixture that has to be supplied by one or more infusion lines L_{A}, L_{B}, L_{c} .. L_{N} to the infusion chamber 8.

The accumulation bag 12 is sized, in particular but not in a limiting manner, to contain about 10 litres of reactive mixture.

Using the accumulation bag 12 enables, advantageously, the waste of chemical material to be reduced significantly, as, at the end of the impregnation cycle, the bag can be contracted and the quantity of hardened residual mixture inside the expandable accumulation bag 12 is significantly reduced compared with what occurs in conventional systems that use open barrels or buckets to contain the mixture.

The closed accumulation bag further prevents and avoids the emission into the work environment of malodorous and/or harmful vapours.

Further, advantageously, containing the mixture in a closed volume owing to the accumulation bag 12 entails a smaller risk of suction or air along the delivery conduits and as far as the impregnation zone, a risk that on the other hand occurs in conventional open barrels, in particular in the steps in which they may empty if they are not correctly monitored, permitting, undesirably, air bubbles to enter and be incorporated into the delivery pipes. Disadvantageously, such air bubbles are also transferred further downstream in the infusion lines, thus causing various drawbacks in the impregnated structures.

The accumulation bag 12 is connected above to the static mixer 34 by a flexible or extendible bellows conduit 36, and is connected below by a further flexible or extendible bellows conduit 37, to a distributing collector 47 that supplies the various infusion lines L_{A}, L_{B}, L_{c} .. L_{N}. The need to have the flexible or extendible bellows conduits 36 and 37 is due to the reasons set out later on.

The accumulation bag 12 is enclosed in a pressurised container 14 that can be transparent to permit visual checking of the degree of collapse of the accumulation bag 12.

In particular, the apparatus 1 comprises a clamping device for connecting firmly and sealingly the ends of the accumulation bag 12 to the pressurised container 14.

The clamping device comprises, for each end 53, 54 of the accumulation bag 12, an annular element 55, shaped for sealingly coupling with an end edge of the pressurised container 14 and for restingly receiving a corresponding end of the accumulation bag 12.

The clamping device further comprises a pair of flange elements 56, each shaped for coupling with a corresponding intermediate ring 57 that in turn engages a respective annular element 55 so as to clamp the corresponding end of the accumulation bag 12.

The flexible accumulation bag 12 can contain a further inner protective bag 61 made of thin plastics, intended for "disposable" use, the function of which is to preserve and maintain the accumulation bag 12 separate from the reactive resin, thus avoiding the formation and persistence thereupon of residues of hardened resin.

The inner protective bag 61 is kept sealed through the effect of the firm clamping exerted - on the turned up ends thereof- by the flange elements 56 opposite the intermediate rings intermediate rings 57.

The pressurised container 14, by a compressed air pressurising system 32, is maintained at an absolute internal pressure having a value P₀ that is not lower than the outer pressure P_{EST} and is sufficient for compensating to the maximum for the pressure losses ΔP_{2A}, ΔP_{2B},... ΔP_{2N} that are generated along the aforesaid infusion lines L_{A}, L_{B}, L_{c} .. L_{N}, and for compensating at least partially for a possible piezometric difference ΔP1 between the entry of the reactive mixture into the infusion cavity 8 and the accumulation bag 12.

The air is delivered through an inlet 58, and the pressure value inside the container 14 is displayed by a suitable pressure indicator 18.

In order to maintain the aforesaid corresponding internal pressure at the value P₀, a control loop system 17 is provided with a proportional pneumatic valve. In particular, the value P₀ can be equal to or greater than 1 bar absolute, up to 5 bar absolute.

The container 14 enclosing the accumulation bag 12 is supported by weighing means 22, such as scales or a load cell or other suitable equivalent means, arranged for monitoring the weight of the reactive mixture contained in the same accumulation bag 12.

The aforementioned flexible or extendible bellows conduits 36, 37 are yieldable and flexible in order not to interfere with the weighing by the load cell or scales 22.

A control unit CU (such as, for example, a PLC) of the apparatus 1, provided with a closed loop system 19, 28, acts to control the total flowrate Q of the reactive mixture that is dispensed by the mixing head 13, according to the signal sent by the weighing means 22 so as to maintain the accumulation bag 12 around a desired filling condition.

The quantity of dispensed mixture is controlled by the difference from the aforesaid closed loop control system, and dosage and dispensing are accelerated or diminished around a suitable reference value (e.g. from 5 to 70 KG/min).

Dispensing of the mixture can be adjusted by a feedforward control loop, so as to supply the accumulation bag 12 at a flowrate reference value, suitably varying the flowrate around this reference value. This control mode is chosen to avoid operating with nil flowrates that would make operation of the static mixer ineffective as, with flowrates that are too low, the static mixer would lose operating effectiveness.

Each infusion line is defined by a flexible tubular conduit L_{A}, L_{B}, L_{c} .. L_{N} along which a respective throttling unit 20 or 21 is provided, which is of peristaltic type and is pneumatically or electrically controlled, is arranged for varying the loss of localised pressure and controlling the flow of mixture in the corresponding flexible conduit, according to the pressure that is established below the barrier film 6 in the infusion points as disclosed in greater detail below.

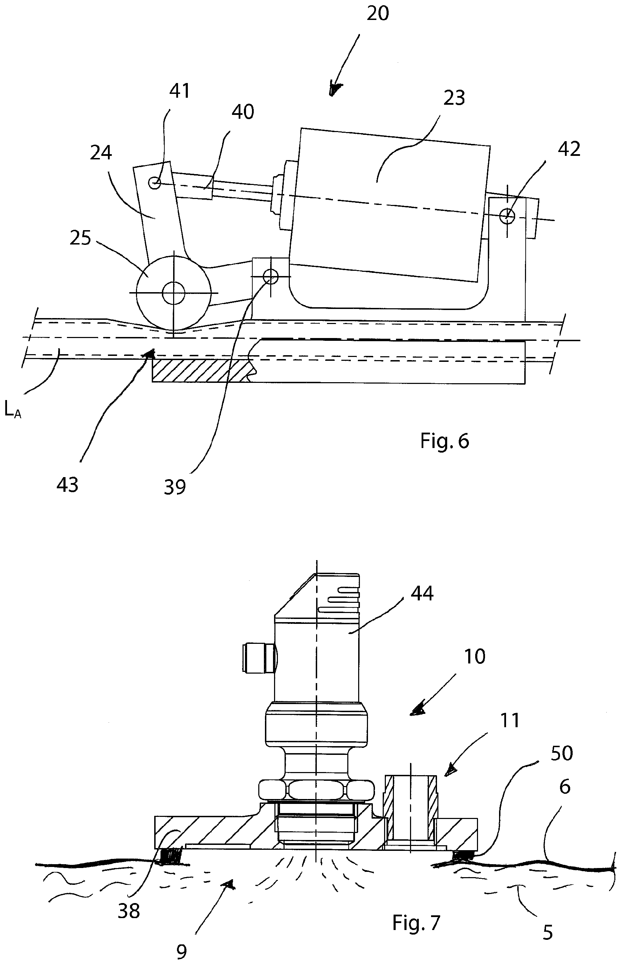

The outlet end of each flexible tubular conduit L_{A}, L_{B}, L_{c} .. L_{N} is connected to a respective inlet port 9 obtained on the barrier film 6 by a corresponding delivering nipple element 10, shown better in Figure 7.

The nipple element 10 comprises a pressure sensor 11 for monitoring the pressure immediately below the barrier film 6.

In particular, the pressure sensor 11 can comprise a pressure switch that intervenes at a set activation threshold, for example at 100 millibar below the outer pressure on the barrier film (900 millibar absolute if there is atmospheric pressure outside), or a vacuum meter that continuously monitors the absolute pressure below the barrier film 6 at the nipple-shaped delivering element 10.

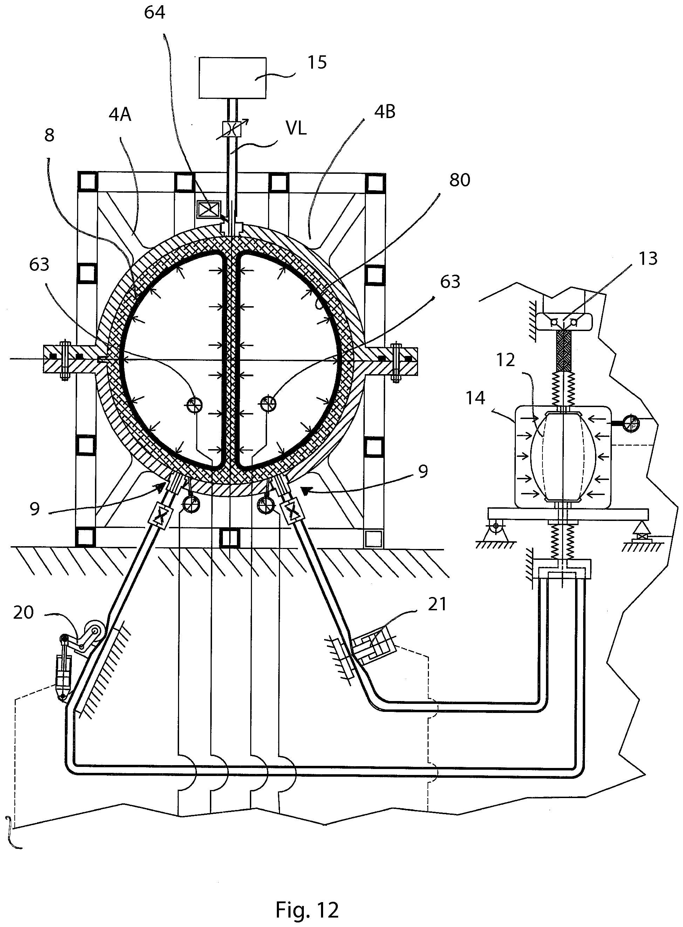

The delivering element 10 can for example have the shape of a pestle, comprises a connection 44 for the respective flexible tubular conduit L_{A}, L_{B}, L_{c} .. L_{N} and a disc-shaped base body 38 that is suitable for being applied to the barrier film 6. The base body 38 is positioned at an inlet port 9 for the entry of the resin obtained on the barrier film 6 and is sealed perimetrically by the biadhesive tape 50 or putty for establishing a seal connection. The delivering element 10 can also have different shapes, for example cylindrical, to be applied to the sides of the barrier film 6. In the embodiment of an apparatus 1 with a closed mould (half-moulds 4A, 4B), the delivering elements 10 can be integrated directly into the stiff part of the mould 4 (as for example shown in Figure 12). The delivering element 10 comprises anyway a connection for the pressure sensor 11 that detects the pressure immediately below the base body 38 or near the delivery point of the reactive resin.

Upstream of each delivering element 10 a sectioning device 51 is provided for manual throttling of the flexible pipe, that is drivable by an operator if it is desired to intervene manually to close or throttle the flow of mixture, thus bypassing the corresponding throttling unit 20, 21, ...N.

The apparatus 1 comprises a vacuum source 15 that is connectable to the infusion cavity 8 by one or more suction lines VL to generate therein an internal pressure P_{INT} that is lower than the outer pressure P_{EST}, the value of which is detected by a suitable pressure sensor 63. This enables the barrier film 6 to be maintained adhering to the reinforcing fibrous support 5 and to promote, through the effect of the vacuum, the flow of reactive mixture inside the infusion cavity 8. Along each suction line VL, upstream of the vacuum source 15, a presence sensor 64 can be located, for detecting the possible resin rising during suction of the air. Owing to the signal supplied by such presence sensors 64, it is possible to close the respective delivering conduits as soon as the front of the resin starts to flow into the corresponding air suction conduits.

The vacuum condition acts to remove not only the air entrapped in the mesh of the fibres but also the gases released by the mixture and assists infiltration of the resin, promoting the elimination of empty spaces and porosity, with a positive effect on the quality and structural performance of the obtained composite structure.

The throttling units 20 are configured for crushing from the outside the respective flexible tubular conduit L_{A}, L_{B}, L_{c} .. L_{N} proportionally by means of a pinching or squashing element controlled by an electric actuator with a stroke proportional to the reference signal, or pneumatic actuator, driven by an electropneumatic valve 29 that transforms a reference electric signal into pneumatic pressure that is proportional thereto, and is controlled by a closed loop control system for throttling in a manner increasing with the pressure detected in the corresponding connecting and delivering element 10, up to a settable threshold value P_{Nmax} corresponding to the difference ΔP_{Nmax} between the outer pressure P_{EST} that acts on the barrier film 6 and the maximum acceptable pressure below the connecting and delivering element 10 detected by the corresponding pressure sensor 11, so as to oppose locally to the flowing reactive mixture a localised additional increase of controlled hydraulic resistance and thus avoid the absolute pressure of the reactive resin below the delivery point exceeding the outer pressure and creating a localised accumulation of resin with consequent lifting of the barrier film 6.

The throttling units 20, 21 .... N positioned along each infusion line L_{A}, L_{B}, L_{c} .. L_{N}, are operationally connected to the control unit CU to be driven independently of one another.

Each throttling unit 20, 21 ... N is selectively driven to reduce, in a controlled manner, the passage of mixture on the basis of signals of the corresponding pressure sensor 11, when the pressure on the corresponding delivering element 10 increases and approaches a preset pressure value.

This prevents local detachment of the barrier film 6 from the bed or mat of fibres 5 with anomalous accumulation of mixture thereunder but ensures that it is possible to supply the flexible tubular conduits L_{A}, L_{B}, L_{c} .. L_{N} with a head of pressure that is greater than atmospheric pressure.

In particular, the throttling units 20, 21 ... N are controlled independently of one another by a control system with a proportional control valve 29 that transforms an electric reference signal, coming from the detection of the corresponding pressure sensor 11, into pneumatic pressure, or into an extended position of the electric actuator so as to throttle the respective flexible tubular conduit L_{A}, L_{B}, L_{c} .. L_{N} the more the pressure detected on the corresponding delivering element 10 approaches a desired maximum pressure threshold set at a value that is lower than the outer pressure that acts on the barrier film. This threshold can also be set as a difference value between the external absolute pressure and the absolute pressure inside the impregnation cavity at the delivery point. Indicatively, the maximum pressure threshold indicated above can be set at a value that is about 100 millibar below the pressure that acts on the barrier film 6. Nevertheless, it can be chosen to set the absolute maximum pressure threshold at an absolute pressure value that is also much lower, for example up to an absolute pressure difference of 500 millibar with respect to the outer pressure.

In one possible pressure control mode, each pressure sensor 11 can operate by detecting both the pressure acting outside the infusion cavity 8, and the pressure inside the infusion cavity 8, so as to have the pressure difference between the interior and exterior to adjust accordingly the appropriate throttle to be given to the respective infusion conduit. In fact, it is important to set as a reference for the adjusting system the maximum pressure threshold not to be exceeded and to exploit only the internal pressure signal to set accordingly the throttling action that is the more pronounced the more this internal pressure approaches the maximum tolerable value set.

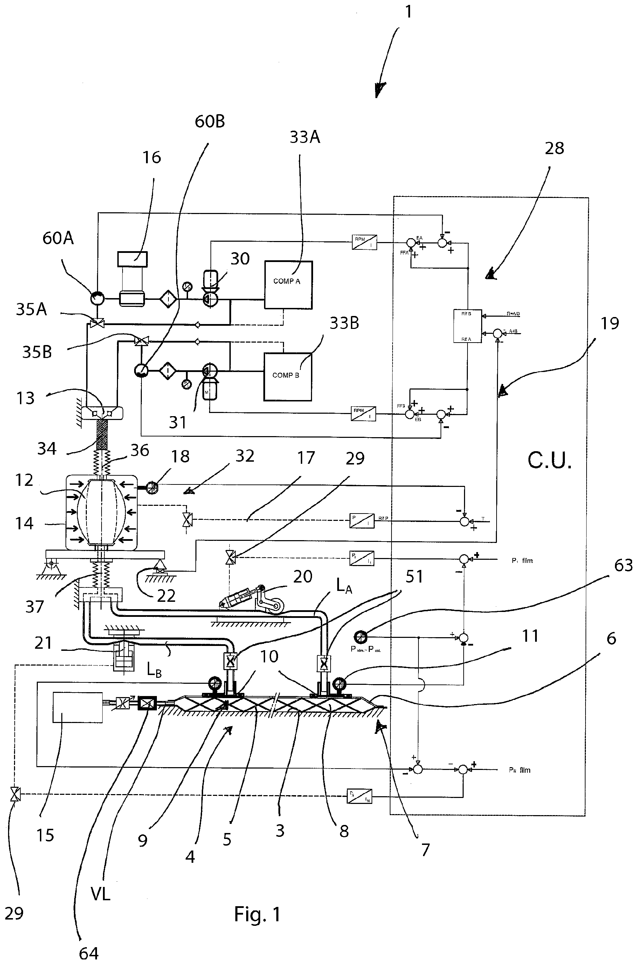

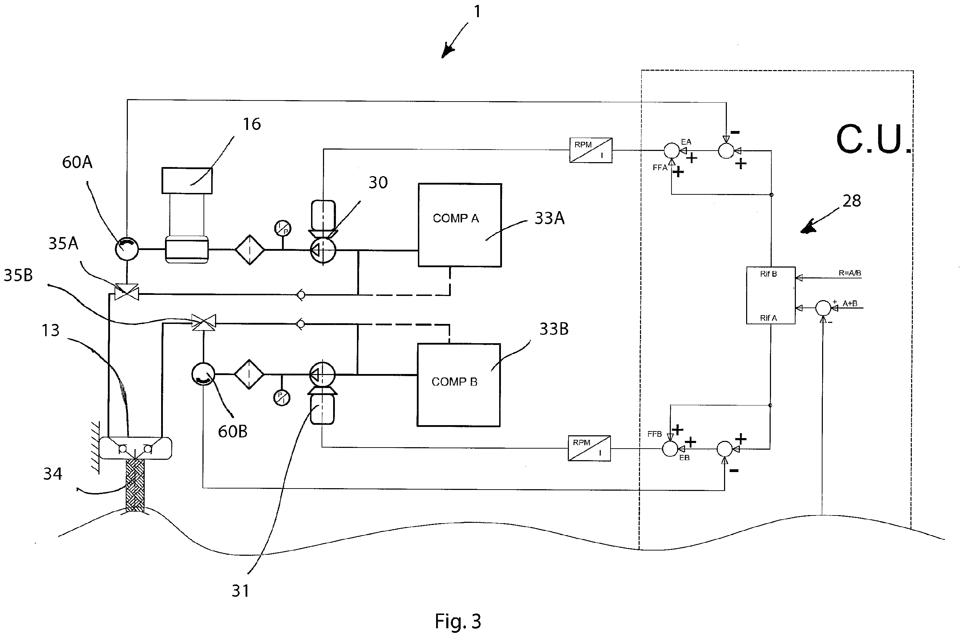

According to the attached schematic representations of Figures 1, 2, 3, in fact each pressure sensor 11 operates as part of a set feedback control system, based on the difference between the outer pressure and the inner pressure compared with the infusion cavity 8: if the pressure difference between the exterior and interior is great, the action of the throttling actuator is inhibited; if on the other hand this pressure difference falls, the adjuster receives a signal that is higher and this results in the throttling action, which is more accentuated the less the pressure difference is.

The throttling units 20, 21 ... N, included in the apparatus 1 can be configured according to two possible embodiments.

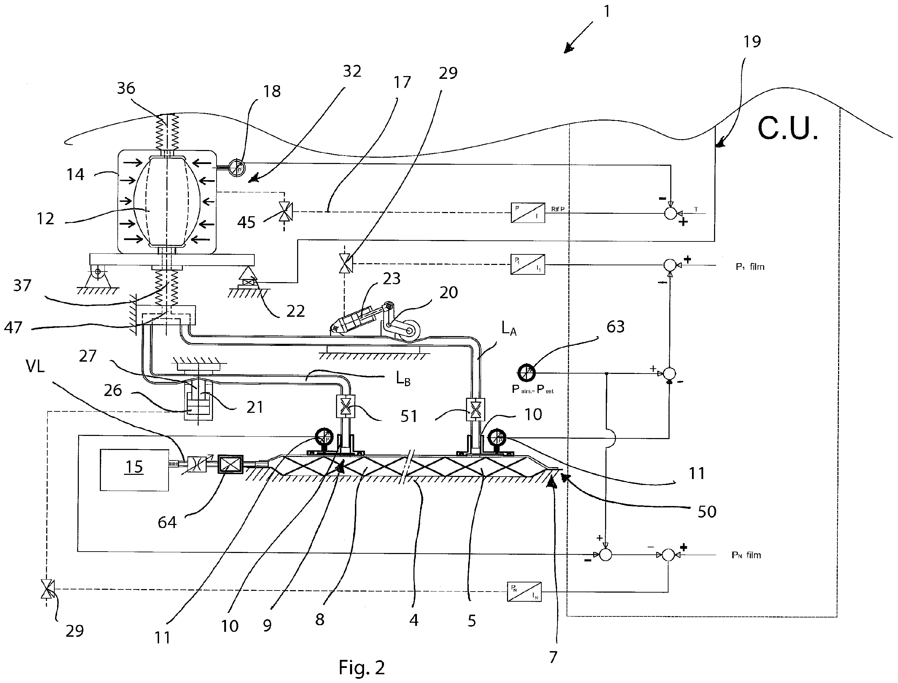

In one embodiment (more visible in Figure 2), the throttling unit 21 comprises a pneumatic cylinder or an electric actuator 26 to the end of which a pinching or compressing wedge element 27 is connected that is suitable for exerting from the exterior a pressure that compresses by throttling the corresponding flexible tubular conduit, which in Figure 2 is indicated by L_{B}.

The wedge element 27 can be coated with a material having a low friction coefficient, for example made of polytetrafluoroethylene, in order not to damage the tubular infusion conduit.

In another advantageous embodiment (better shown in Figure 6), the throttling unit 20 is of the type comprising a pneumatic cylinder 23 the rod 40 of which is connected, by a pivot 41, to an "L"-shaped lever 24, that is rotatable around a pivot 39. The body of the cylinder 23 is connected to a further hinge 42.

The oscillating lever 24 supports a pressing-wheel 25 that is suitable for compressing, by throttling it locally, as indicated with 43 in Figure 6, the respective flexible tubular conduit L_{A} for adjusting the loss of localised pressure and adjusting in this manner the transit of mixture. This embodiment of throttling unit 20 is advantageous for certain features because: it permits very wide and precise adjustment owing to the lever system that can increase the force of the pneumatic cylinder 23, transforming the force into a greater force on the pressing-wheel 25; it enables flexible pipes of differing dimensions and stiffness to be inserted easily and rapidly below the wheel; it enables throttling on the flexible pipe to be performed without sliding friction and incision owing to the freedom of rotation and to the round shape of the wheel 25, which can also be grooved.

Both the embodiments of throttling units 20 and 21 share the advantage of not being, during operation, ever in contact with the mixture as they act outside the tubular infusion conduits, and this implies a long operating life of these throttling units 20, 21 and a significant reduction of the general operations of cleaning and maintenance of the apparatus 1.

The apparatus 1 can be provided with an optical system for viewing, through the transparent barrier film 6, the behaviour of the reactive mixture inside said infusion chamber 8, to control the evenness of impregnation and to interrupt automatically and selectively the flow of mixture of each infusion line L_{A}, L_{B}, L_{c} .. L_{N} when the corresponding zone to be impregnated is completely filled.

The operation of the apparatus 1 and the associated method of infusion according to the present invention is disclosed below.

Once the bed or reinforcing support 5 of fibres has been prepared and rested in the mould 4 that can be heated, once the barrier film 6 has been sealed and the connections of all the tubular infusion conduits L_{A}, L_{B}, L_{c} .. L_{N} and of the suction pipe/s VL have been completed, the vacuum source 15 is activated so as to create inside the gap or infusion cavity 8 the desired vacuum condition, i.e. an absolute pressure equal to or almost equal to 0 bar absolute.

The vacuum condition arrives and operates at the start via the flexible conduits even in the accumulation bag and in the mixing head as far as the recirculating valves.

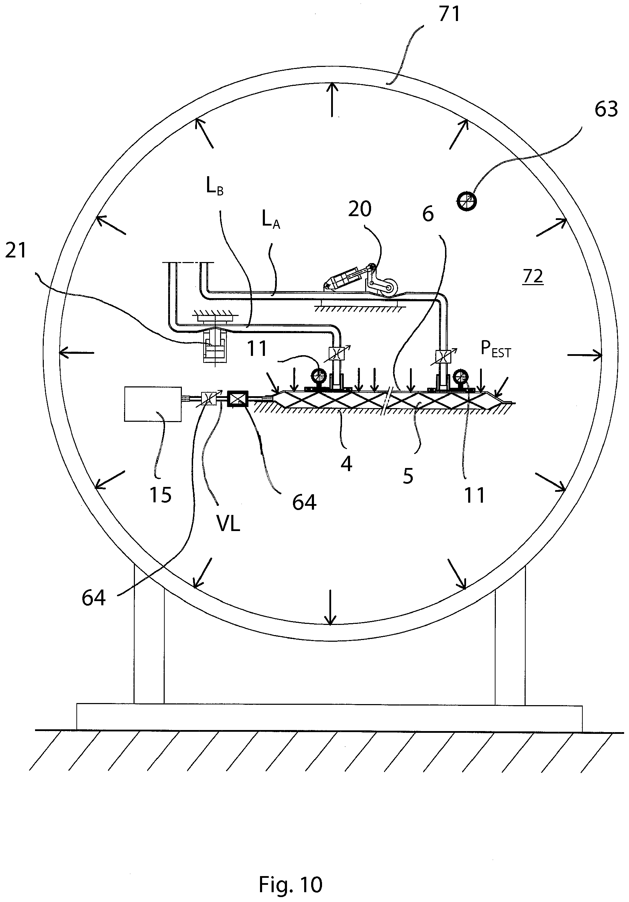

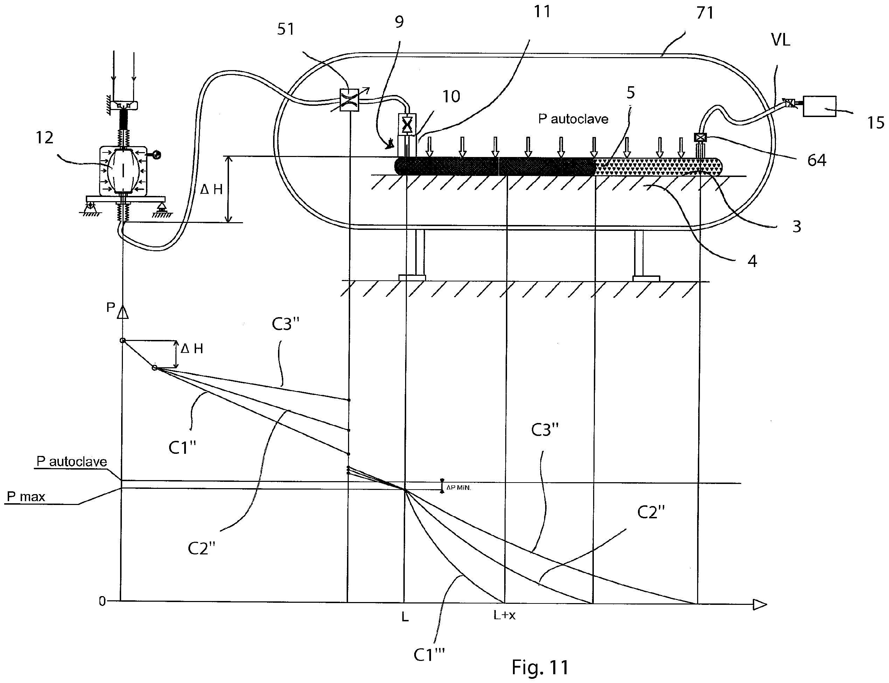

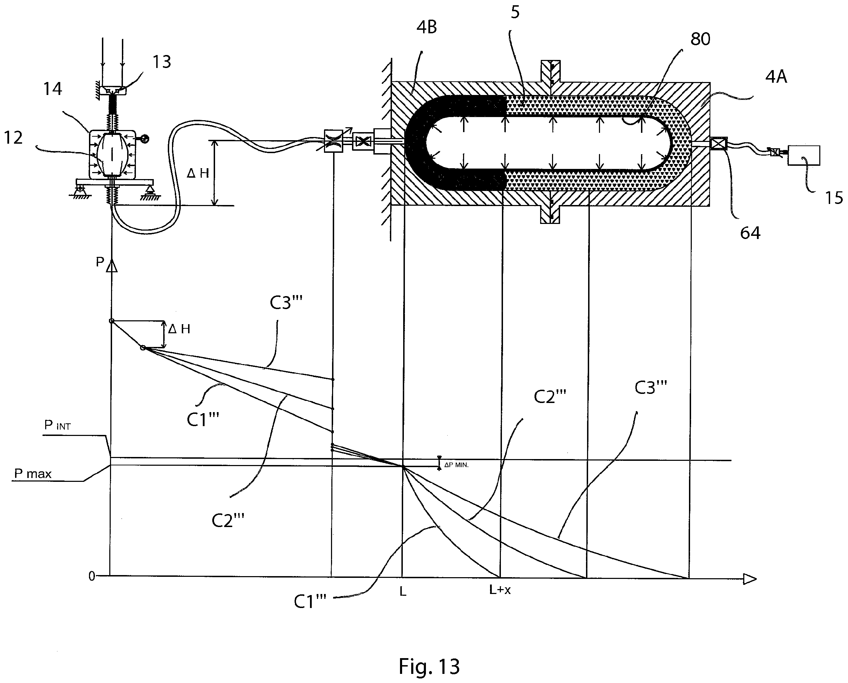

In the case of the embodiment of an apparatus 1 with an autoclave 71, shown schematically in Figures 10 and 11, on the barrier film 6 an outer pressure P_{EST} is made to act that is greater than the atmospheric pressure P_{ATM}. This outer pressure P_{EST}, alternatively to the use of the autoclave 71, can also be generated using collapsable internal elements 80, for example collapsible flexible bladders 80, that act as removable cores for making internal cavities of hollow pieces (e.g. blades, provided with an internal cavity, for wind turbines). Such an embodiment of an apparatus 1 with removable collapsible cores is schematised in Figures 12, 13.

The infusion process provides for dosing in a stoichiometric ratio, by the pumps 30 and 31, the resin and the hardener and for mixing the resin and the hardener by the mixing head 13 and the corresponding mixer 34 to fill the accumulation bag 12, which is subjected to the outer pressure P₀ (1-5 absolute bar), until a reference weight value is reached. Simultaneously, the mixture with which the accumulation bag 12 is filled, is subjected to the pressure transmitted from the exterior P₀ (1- 5 bar absolute), and starts to flow along the various infusion lines L_{A}, L_{B}, L_{c} .. L_{N} and then into the infusion chamber 8, owing both to the effect of the pressure difference between the bag 12 and the very little absolute pressure induced by the vacuum pump in the infusion cavity 8, a difference that sums up the effect of the thrust of the corresponding pressure P₀, which is greater than atmospheric pressure, acting on the accumulation bag 12 and the effect of the vacuum generated inside the infusion chamber 8.

The apparatus 1 and the method according to the invention ensure a greater influx of resin along the flexible tubular conduits and thus a reduction in impregnation time owing to the increase in the pressure jump between the accumulation bag 12 and the delivering element 10.

For the entire time of the impregnation process, the control unit CU, by the loop control systems disclosed above, ensures constant filling of the accumulation bag 12 owing to the signal of the weighing means 22, consequently adjusting the dispensing flowrate of the mixing head 13.

Owing to the monitoring of the pressure at all the infusion points, i.e. under each delivering element 10, and to the additional action of the pressure jump (throttling) controlled by the throttling units 20, 21... N, it is ensured that the impregnation operation proceeds correctly without undesired localised accumulations occurring and phenomena of detachment of the barrier film 6 from the underlying fibres 5.

Owing to the configuration of the system according to the present invention, in particular owing to the pressurization of the accumulation bag 12 at a pressure above external atmospheric pressure, substantial cancellation of the pressure losses ΔP_{2A}, ΔP_{2B},... ΔP_{2N} is obtained (due to viscous frictions, narrowing, etc. that are a cause of reduction in infusion speed), to which the mixture is subjected during travel from the accumulation bag 12 as far as the inlet port of the infusion cavity 8, and the disturbance caused by the possible piezometric difference ΔP₁ (difference in level between the exit from the accumulation bag 12 and the inlet height in the inlet ports 9 of the barrier film 6) is successfully redimensioned or made almost without influence.

This advantageous technical effect is particularly appreciable when it is necessary to impregnate structures having a significant vertical extent (5 -7 metres), considering that the traditional use of an open accumulation container subjected to atmospheric pressure ensures a piezometric head of about 10 metres.

With the present system, in substance, instead of detecting in a more complex and less useful manner parameters such as speed, direction, quantity of the entering resin or the vacuum at different points of the infusion chamber, pressure is monitored only at the infusion points: it is sufficient to check that the pressure at the infusion points (nipple elements 10) is correctly lower than the maximum threshold value (e.g. 100 millibar below the outer pressure on the barrier film) to ensure that zones further downstream in the infusion chamber 8 will never be subjected to dangerously high pressure.

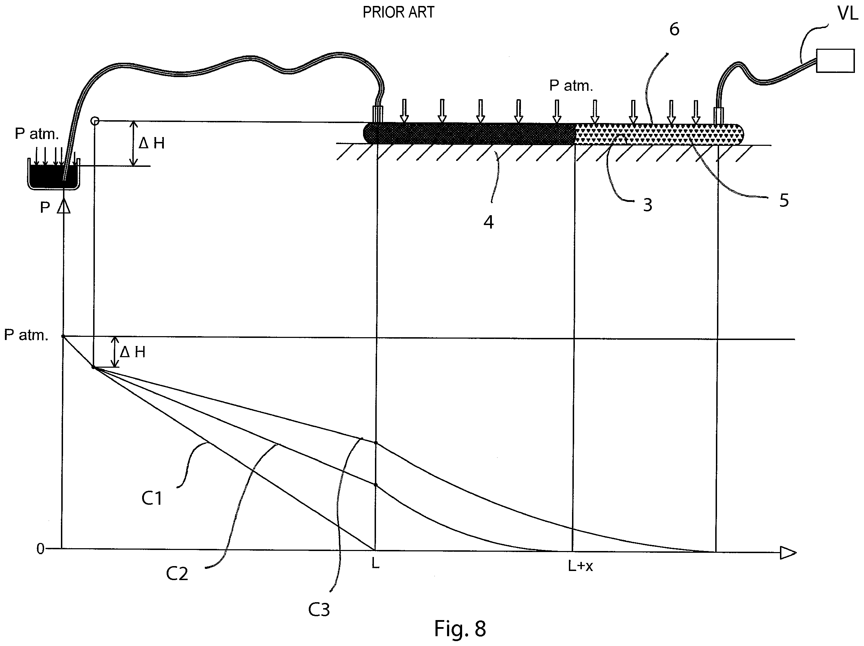

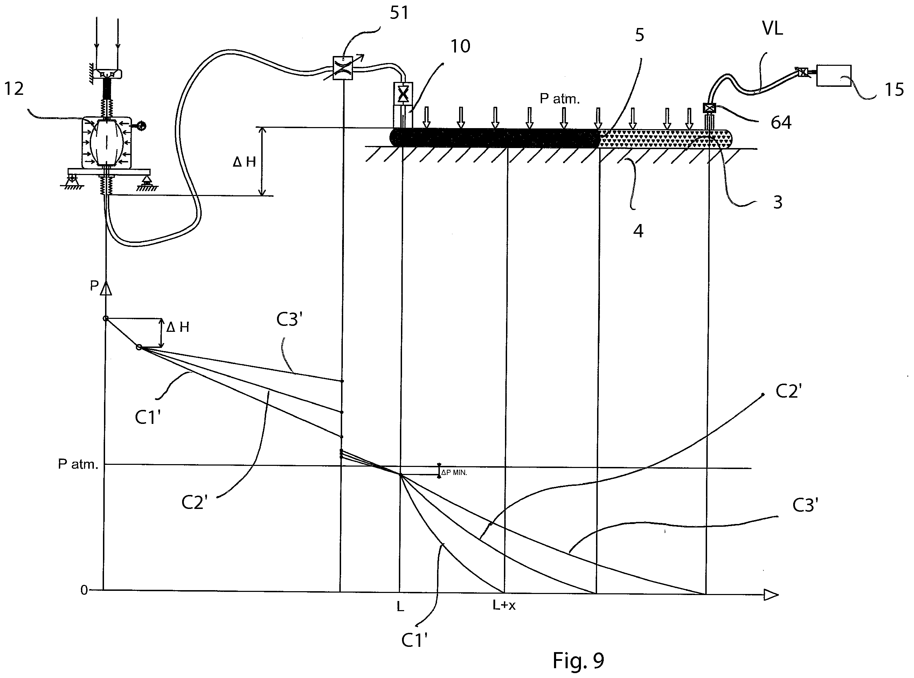

The advantageous effects of the method according to the invention also emerge and are very clear when the barrier film 6 can be subjected to external pressure that is greater than atmospheric pressure, as in the case of an infusion made in hollow bodies with an internal barrier bag or bladder or infusion made in a pressurized environment (e.g. autoclave) and are highlighted by a comparison of the diagram of Figure 9, relating to the present invention, with the diagram of Figure 8, relating to a conventional infusion system.

In the two diagrams there is shown, depending on the position reached by the front of the reactive mixture, the pressure profiles that are installed along the paths of the mixture from the accumulation container of the mixture (i.e. the accumulation bag 12 under pressure in the case of the invention, and the open accumulation container in the case of the conventional system).

In the case of the prior art, in Figure 8, the diagram shows three different curves C1, C2, C3 that show the pressure profile that obtains at different stages of advancement of the infusion front. The curve C1 shows the pressure pattern that obtains in the infusion tubular conduit in a state of advancement corresponding to reaching - by the resin - of the infusion delivery point. With "L", the length of the tubular infusion conduit is shown, and with "x" the additional distance, with respect to "L", travelled inside the infusion chamber.

The gradient of this curve varies as the front of the resin continues to advance inside the infusion gap, as shown by the curves C2 corresponding to a state of advancement in which the resin has reached a distance L+x), and the curve C3, relating to a further still more advanced infusion state. In other words, as the diffusion front of the resin widens with respect to the infusion delivery point, in the latter, the pressure difference is reduced progressively with respect to atmospheric pressure, i.e. the absolute pressure grows towards the atmospheric pressure.

As the infiltration of the resin progresses, and thus the total resistances increase that contrast the advancement thereof against the already impregnated fibre, infusion speed is also reduced, in other words the flowrate Q of resin flowing in the tubular conduit decreases.

In the case of the present invention, the corresponding curves C1', C2', C3' of FIG 9 are translated upwards by the pressurization of the accumulation bag 12 at the pressure P0 that is greater than atmospheric pressure. These curves refer to the case of infusions with an open mould 4 and barrier sheet subjected to the atmospheric pressure. In the case of the apparatus 1 with autoclave 71, the corresponding curves C1", C2", C3" are shown that are plotted in the diagram of Figure 11, that are more translated upwards and with greater gradients. Similarly, in the case of infusion in a closed mould, the corresponding curves C1''', C2''', C3''' are shown plotted in the diagram of Figure 13.

The throttling action exerted by the respective throttling unit 20 or 21, in response to the signals of the associated pressure sensor 11, means that at the infusion delivery point there is always an absolute pressure that is lower than the outer pressure on the barrier film corresponding to the absolute pressure setting value of the control system (e.g. 100 millibar below the outer pressure).

The closed loop control system increases the total pressure loss along the delivery conduit as the absolute pressure at the delivery point 10 approaches the outer pressure and enables the various conduits to be supplied with a pressure to the accumulation zone that is much greater than the atmospheric pressure, in this manner increasing the instantaneous delivery flowrate and the total quantity introduced over time and ensuring that, should the internal pressure come dangerously near the outer pressure, the throttling exerted on the flexible conduit immediately re-establishes the correct condition.

In other words, the diffusion flowrate of the resin generated by the vacuum in the gap (flowrate proportional to the absolute pressure of the reactive resin in the delivery point that can be up to a little less than 1000 millibar with respect to external atmospheric pressure) comes to depend substantially very largely only on the resistances to advancement that are encountered inside the infusion chamber 8, i.e. on the advancement resistance between the fibres, and is no longer reduced by the resistance to sliding of the resin also along the tubular infusion conduits and on the piezometric head. It is on the other hand the effect of the pressurization of the accumulation bag 12 above the outer pressure acting on the barrier film 6 that compensates the piezometric head and overcomes the hydraulic resistances along the flexible conduit as far as the delivery point 10 of the resin 10 whereas the possible pressurization of the barrier film 6 within a hollow shape or applying a greater outer pressure (for example by proceeding with infusion in a closed mould) makes possible greater compaction of the fibres in relation to the quantity and a flowrate of impregnated resin that are much greater than the infusion achieved by the thrust of only atmospheric pressure.

To sum up, pressurization of the accumulation bag 12, detecting the direct pressure at the infusion delivery points with consequent controlled throttling of the infusion conduit achieves, synergically, the effect of contrasting effectively the resin supply pressure losses and of improving the impregnation process, with resulting advantages for the quality of the product obtained and process timing, with a clear increase in productivity.

It is observed experimentally that this innovative infusion method leads to having advantageously a reduction in infusion time that can also be 20% compared with the known traditional system with accumulation at atmospheric pressure, that in processes that can last several hours means a significant financial advantage, whereas experimental tests with bladders applied within hollow bodies have reduced infusion time by even more than 50% and composites being created with up to 7% less resin.

Further, the apparatus and the method according to the present invention enable the infusion process to be conducted without the emission of vapours of the chemical reactants that may be harmful in the work environment.

What has been said and shown in the enclosed drawings has been provided by way of illustrative example of the innovative features of the apparatus 1 and of the method of infusion and other modification can be made without thereby falling outside the scope of the invention.

In practice, the materials, inasmuch as they are compatible with the specific use and with the respective single elements for which they are intended, can be suitably chosen according to requested requirements and according to the available prior art.

It is possible to configure and size the apparatus 1, with possible variations on and/or additions to what has been disclosed and illustrated in the attached drawings.

## Claims

1. Method for producing a body made of a composite material reinforced with fibres by infusion of a reactive mixture in vacuum conditions, comprising the steps of:
a) arranging one or more layers of fibres on a contrasting surface (3) of a mould (4) to define a reinforcing fibrous support (5) intended to be impregnated with said reactive mixture,
b) applying to said reinforcing fibrous support (5) a barrier element (6;80) that is impermeable to air and to resins such as to bound together with said contrasting surface (3) an infusion cavity (8) separated from the external environment, and provide one or more inlet ports (9) for delivering reactive mixture to said infusion cavity (8);
c) connecting said infusion cavity (8) to a vacuum source (15) by one or more suction lines (VL) to generate inside said infusion cavity (8) an internal pressure (P_{INT}) that is lower than an external pressure (P_{EST}) acting on said barrier element (6;80), so as to maintain said barrier element (6;80) adhering to said reinforcing fibrous support (5) and promote the flow of reactive mixture inside said infusion cavity (8),
d) positioning, at each inlet port (9) for the reactive mixture, a delivering element (10) for delivering reactive resin, which delivering element (10) is provided with a pressure sensor (11), and
e) connecting each delivering element (10) for the reactive resin with a respective delivery conduit (L_{A}, L_{B}, L_{c} .. L_{N}) to an accumulation bag (12) made of flexible material that is supplied with reactive mixture in a controlled manner by a resin dosing unit provided with a mixing head (13),
f) enclosing said accumulation bag (12) in a pressurised container (14) the internal pressure of which is adjusted and maintained at an absolute pressure value having a value P₀ that is not less than said external pressure (P_{EST}) and at least sufficient to compensate for the pressure losses ΔP_{2A}, ΔP_{2B},... ΔP_{2N} that are generated along the aforesaid delivery conduits (L_{A}, L_{B}, L_{c} .. L_{N}), and to compensate at least partially for a possible piezometric difference (ΔP₁) between the entry of the reactive mixture into said infusion cavity (8) and said accumulation bag (12),
g) monitoring and detecting the pressure inside each connecting and delivering element (10) by the respective pressure sensors (11) and
h) generating a controlled pressure drop by throttling in a controlled and mutually independent manner the delivery conduits (L_{A}, L_{B}, L_{c} .. L_{N}) on the basis of the signals of the corresponding pressure sensors (11) to reduce the corresponding inflow of reactive mixture in a manner that is proportional to an absolute pressure increase inside the corresponding connecting and delivering elements (10), to maintain a pressure difference between the outside and the inside of the infusion cavity (8) in the delivery point such that the absolute pressure in these delivery points does not exceed, by a desired differential pressure value, a pre-set admissible maximum value that is lower than said external pressure (P_{EST}) acting on said barrier element (6; 80).

2. Method according to claim 1, wherein said barrier element comprises a barrier film (6), that is impermeable to air and to resins, that is perimetrically connected in an air sealing manner to said mould (4) and on which said inlet ports (9) and said delivering elements (10) are provided for the reactive mixture, wherein the inflow of reactive mixture is increased and adjusted in a manner that is proportional to an increase in the absolute pressure inside corresponding connecting and delivering elements (10), compensating for the pressure losses along the conduits, so as to prevent a detachment of said barrier film (6) from said reinforcing fibrous support (5) and avoid an anomalous accumulation of mixture under the barrier film (6).

3. Method according to claim 2, wherein on the outer surface of said barrier film (6) an external pressure (P_{EST}) that is greater than the atmospheric pressure (P_{ATM}) is generated.

4. Method according to claim 3, wherein said external pressure (P_{EST}) is obtained by an airtight casing (71) in a pressurised condition, inside which said contrasting surface (3) supporting said reinforcing fibrous support (5) and said barrier film (6) are positioned.

5. Method according to claim 1, wherein said mould (4) is defined by a pair of half moulds (4A, 4B) that are reciprocally couplable, and wherein said barrier element comprises a collapsible core element (80) conformed for obtaining a cavity inside said body made of composite material, wherein said inlet ports (9) for the resin are obtained on said pair of half moulds (4A,4B).

6. Method according to claim 5, wherein said collapsible core element (80) is made of flexible material and is inflated with air or gas to act as a removable internal counter mould to obtain a hollow body in a single piece.

7. Method according to any preceding claim, wherein there is provided, by a control unit (C.U.) configured with a closed loop control (28), adjusting the partial flowrates of the reactant components and consequently the total flowrate (Q) to the mixing head (13) so as to maintain said accumulation bag (12) flexible in a desired filling condition at a preset volume or weight.

8. Method according to any preceding claim, wherein said pressurising container (14) is pressurised with compressed air at a pressure that is not less than the external pressure (P_{EST}) acting on said barrier element (6;80), the pressure in said pressurising container (14) being adjusted by a control loop (17) and by a proportional pneumatic valve (45).

9. Method according to a preceding claim, wherein the pressure in said pressurising container (14) is maintained at a value that can vary from 1 bar absolute to 5 bar absolute.

10. Method according to any preceding claim, wherein the weight is detected and monitored of said container (14) containing said accumulation bag (12) to control, by a differential adjusting loop (19), the quantity of reactant mixture contained in said accumulation bag (12), and adjusting in a closed loop the quantity of reactant mixture dispensed by said mixing head (13) to said collecting bag (12).

11. Method according to any preceding claim, wherein each infusion line (L_{A}, L_{B}, L_{c} .. L_{N} comprises a flexible tubular conduit and wherein for each infusion line (L_{A}, L_{B}, L_{c} .. L_{N}), independently of one another, there is provided a respective pneumatically or electrically controlled throttling unit (20; 21), acting to squash from the outside the respective flexible tubular conduit (L_{A}, L_{B}, L_{c} .. L_{N}) in a manner that is proportional to the absolute pressure value detected by the corresponding pressure sensor (11), so as to oppose locally a controlled hydraulic resistance to the flowing reactive mixture.

12. Method according to claim 11, wherein said throttling unit (20; 21... N), configured for operating according to a peristaltic operating principle, acts to reduce the passage section in the respective flexible tubular conduit (L_{A}, L_{B}, L_{c} .. L_{N}) and is controlled proportionately by an electric actuator or by a valve (29) that transforms an electric reference signal into pneumatic pressure, and is controlled by a closed loop control system for throttling in a manner that increases proportionately to the difference between the pressure detected in the corresponding connecting and delivering element (10), and a settable threshold value ΔP_{Nmax} corresponding to the difference between the pressure outside the barrier film and the maximum acceptable pressure below the corresponding connecting and delivering element (10).

13. Method according to claims 2 to 12, wherein said barrier film (6) that is impermeable to air and resin is connected perimetrically, by a biadhesive sealing tape or a sealing putty element, to a perimeter zone (7) of said mould (4) bounding said contrasting surface (3), so as to define said infusion cavity (8).

14. Method according to one or more preceding claims, wherein there is provided visually inspecting - by an optical system operationally connected to the control unit (CU) through said transparent barrier film (6) - the advancement of the reactive mixture inside said infusion chamber (8) to control the impregnation homogeneity and interrupt selectively the mixture flow of an infusion line (L_{A}, L_{B}, L_{c} .. L_{N}) when the corresponding zone to be impregnated is completely filled.

15. Method according to any preceding claim, wherein said reactive mixture is obtained by dosing and mixing a resin component (A) and a reactant or hardener component (B) by volumetric pumps (30, 31), whose flowrates are controlled in a closed loop by a flowrate meter located downstream of each pump and a command and control unit that controls and maintains the stoichiometric ratio of the components with the varying of the quantity to be dispensed through the mixing head (13) to the flexible accumulation bag (12) according to the detected weight of reactant mixture contained in said accumulation bag (12).

16. Method according to any preceding claim, wherein said reactive mixture is obtained by dosing and mixing a resin component (A) and a reactant or hardener component (B) by volumetric pumps (30, 31).

17. Method according to any preceding claim, wherein said vacuum source (15) is driven to generate inside said infusion cavity (8) an internal pressure (P_{INT}) having a value that is settable from 0 to 900 millibar absolute.

18. Apparatus for direct infusion in vacuum conditions of a reactive mixture for producing a body made of reinforced composite material, comprising:
- a mould (4) having a contrasting surface (3) that is suitable for receiving one or more layers of fibres defining a reinforcing fibrous support (5) intended to be impregnated with said reactive mixture,
- a barrier element (6; 80) that is impermeable to air and resin that is suitable for pressing on said reinforcing fibrous support (5) and arranged for bounding an infusion cavity (8) that is separated from the external environment,
- one or more inlet ports (9) for delivering the reactive mixture to said infusion cavity (8);
- a vacuum source (15) that is connectable to said infusion cavity (8) by one or more suction lines (VL) to generate inside said infusion cavity (8) an internal pressure (P_{INT}) below the external pressure (P_{EST}) acting on said barrier element (6;80), to promote the flow of reactive mixture inside said infusion cavity (8),
- a device (13, 30, 31) for dosing and mixing a resin (A) with a reactant or hardener component (B) to obtain said reactive mixture,
- an accumulation bag (12), made of flexible material, suitable for receiving and containing the reactive mixture supplied in a controlled manner by said dosing and mixing device (13, 30, 31), said accumulation bag (12) being enclosed in a pressurised container (14),
- one or more infusion lines (L_{A}, L_{B}, L_{c} .. L_{N}) arranged for connecting said accumulation bag (12) to said infusion chamber (8) for delivering said reactive mixture,
- pressurising means (32) configured for adjusting and maintaining, inside said pressurised container (14), an internal pressure at an absolute pressure value (P₀) that is not less that the external pressure (P_{EST}) acting on said barrier element (6;80) and at least sufficient for compensating for the maximum pressure losses (ΔP_{2A}, ΔP_{2B},... ΔP_{2N}) that are generated along said infusion lines (L_{A}, L_{B}, L_{C} .. L_{N}) and inside said infusion cavity (8), and at least partially compensating a possible piezometric head difference (ΔP1) between the entry of the reactive mixture in said infusion cavity (8) and said accumulation bag (12),
- one or more connecting and delivering elements (10) provided at an end of each infusion line (L_{A}, L_{B}, L_{C} .. L_{N}) and each positionable on a respective inlet port (9) for the mixture,
- each of said one or more connecting and delivering elements (10) being provided with a pressure sensor (11) for detecting and monitoring the pressure present below the barrier film (6) at the connecting and delivering element (10),
- one or more throttling units (20, 21) positioned along each infusion line (L_{A}, L_{B}, L_{c} ..L_{N}), and drivable independently of one another to reduce the passage of mixture in a controlled manner on the basis of the signals of the corresponding pressure sensors (11), to avoid an anomalous accumulation of mixture under said barrier element (6;80) when the absolute pressure in the corresponding connecting and delivering element (10) increases and approaches a pre-set permissible maximum value that is lower than said external pressure (P_{EST}) acting on said barrier element (6; 80).

19. Apparatus according to claim 18, wherein said barrier element comprises a barrier film (6) that is impermeable to air and resin and is suitable for being perimetrically sealingly connected to a perimeter zone (7) of said mould (4) that bounds said contrasting surface (3), wherein said one or more inlet ports (9) for the reactive mixture are obtained on said barrier film (6), and wherein said one or more throttling units (20, 21) are configured for throttling the passage of reactive mixture on the basis of the signals of the corresponding pressure sensors (11), to prevent said barrier film (6) getting detached from said reinforcing fibrous support (5) and avoid an anomalous accumulation of mixture under the barrier film (6).

20. Apparatus according to claim 18 or 19, further comprising a casing (71) for enclosing, in a sealingly bounded volume (72), said contrasting surface (3) and said barrier element (6), and configured for being pressurised to a pressure (P_{EST}) that is greater than the atmospheric pressure (P_{ATM}), a sensor (63) being provided for controlling the pressure in said volume (72).

21. Apparatus according to claim 18 or 19, wherein said mould (4) comprises a pair of half moulds (4A, 4B) that are mutually couplable, and wherein said barrier element comprises a collapsible core element (80), which is made of flexible material and is collapsable with air or gas to act as removable internal counter mould to obtain a hollow body in a single piece, and wherein said inlet ports (9) for the resin are obtained on said pair of half moulds (4A,4B).

22. Apparatus according to any one of claims 18 to 21, comprising weighing means (22) coupled with said pressurised container (14) and arranged for monitoring the weight of the reactive mixture contained in said accumulation bag (12), there being provided a closed loop control system (19, 28), included in a control unit (C.U.), to control the partial flowrates of the reactant components and consequently the total flowrate to the mixing head (Q) of the reactive mixture supplied so as to maintain said accumulation bag (12) in a desired filling condition at a set volume or weight.

23. Apparatus according to any one of claims 18 to 22, comprising a control loop system (17) and a proportional pneumatic valve (45) for controlling and maintaining at a desired value from 1 bar to 5 bar absolute, the pressure inside said pressurising container (14) by compressed air pressurisation.

24. Apparatus according to any one of claims 18 to 23, wherein each infusion line (L_{A}, L_{B}, L_{c} .. L_{N}) comprises a flexible tubular conduit and wherein said throttling units (20, 21,.. N) are of the pneumatically or electrically controlled peristaltic type, configured for squashing from the exterior the respective flexible tubular conduit (L_{A}, L_{B}, L_{c} .. L_{N}) in a manner that is proportional to the absolute pressure value detected by the corresponding pressure sensor (11), so as to oppose locally a controlled hydraulic resistance to the flowing reactive mixture.

25. Apparatus according to any one of claims 18 to 24, wherein said throttling units (20; 21, N) are controlled independently of one another by a control system with a proportional control valve (29) that transforms a reference electric signal, deriving from detecting by the corresponding pressure sensor (11), in pneumatic pressure or with proportional electric actuator, so as to throttle the respective flexible tubular conduit (L_{A}, L_{B}, L_{c} .. L_{N}) more the more the pressure detected in the corresponding connecting and delivering element (10) approaches a desired set maximum threshold P_{Nfilm} corresponding to the difference ΔP_{Nfilm} between the pressure outside the barrier film and the maximum acceptable pressure below the connecting and delivering element.

26. Apparatus according to any one of claims 18 to 25, wherein each throttling unit comprises a pneumatic cylinder (23) connected to a hinged lever (24) provided with a wheel pressing element (25) suitable for exerting from the exterior a throttling pressure on the corresponding flexible tubular conduit (L_{A}, L_{B}, L_{c} .. L_{N}).

27. Apparatus according to any one of claims 18 to 25, wherein each throttling unit comprises a pneumatic cylinder (26) to the end of which a pressure wedge element (27) is connected that is suitable for exerting from the exterior a throttling pressure on the corresponding flexible tubular conduit (L_{A}, L_{B}, L_{c} .. L_{N}).

28. Apparatus according to any one of claims 18 to 27, comprising an optical system for viewing, through said transparent barrier film (6), the advancement of the reactive mixture inside said infusion chamber (8) to control the homogeneity of impregnation and the selective interruption of the flow of mixture of each infusion line (L_{A}, L_{B}, L_{c} .. L_{N}) when the corresponding zone to be impregnated is completely filled.

29. Apparatus according to any one of claims 18 to 28, wherein said dosing device (30, 31) comprises volumetric pumps (30, 31) for dosing and supplying said resin (A) and said reactant or hardener component (B), whose flowrates are controlled in a closed loop by flowrate meters located downstream of each pump, and a command and control unit that controls and maintains the stoichiometric ratio of the components with the varying of the total quantity to be dispensed through the mixing head (13) to the flexible accumulation bag (12).

30. Apparatus according to any one of claims 18 to 29, wherein said dosing device (13, 30, 31) comprises a mixing head (13) and volumetric pumps (30, 31) for dosing and supplying said resin (A) and said reactant or hardener component (B), which are drivable in a controlled manner to adjust the correct flowrate of the mixing head (13) according to the detected weight of reactive mixture contained in said accumulation bag (12).

## Patentansprüche

1. Verfahren zum Herstellen eines Körpers aus einem Verbundstoffmaterial, das durch Infusion eines reaktionsfähigen Gemisches unter Vakuumbedingungen mit Fasern verstärkt ist, umfassend die Schritte:
a) Anordnen einer oder mehrerer Faserschichten auf einer kontrastierenden Oberfläche (3) einer Form (4), um einen Verstärkungsfaserträger (5) zu definieren, der mit dem reaktionsfähigen Gemisch imprägniert werden soll,
b) Aufbringen eines Sperrschichtelements (6;80), das für Luft und Harze undurchlässig ist, auf den Verstärkungsfaserträger (5), zum Verbinden eines Infusionshohlraums (8) getrennt von der Außenumgebung mit der kontrastierenden Oberfläche (3), und Bereitstellen einer oder mehrerer Einlassöffnungen (9) zur Abgabe eines reaktionsfähigen Gemisches an den Infusionshohlraum (8);
c) Verbinden des Infusionshohlraums (8) mit einer Vakuumquelle (15) durch eine oder mehrere Saugleitungen (VL), um im Inneren des Infusionshohlraums (8) einen Innendruck (P_{INT}) zu erzeugen, der niedriger ist als ein Außendruck (P_{EST}), der auf das Sperrschichtelement (6;80) wirkt, um so das Sperrschichtelement (6;80) an dem Verstärkungsfaserträger (5) in Haftung zu halten und den Strom von reaktionsfähigem Gemisch im Inneren des Infusionshohlraums (8) zu fördern,
d) Positionieren, an jeder Einlassöffnung (9) für das reaktionsfähige Gemisch, eines Abgabeelements (10) zur Abgabe von reaktionsfähigem Harz, welches Abgabeelement (10) mit einem Drucksensor (11) versehen ist, und
e) Verbinden jedes Abgabeelements (10) für das reaktionsfähige Harz mit einer entsprechenden Abgabeleitung (L_{A}, L_{B}, L_{c} .. L_{N}) zu einem Sammelbeutel (12) aus flexiblem Material, dem reaktionsfähiges Gemisch in gesteuerter Weise durch eine Harzdosiereinheit zugeleitet wird, die mit einem Mischkopf (13) versehen ist,
f) Einschließen des Sammelbeutels (12) in einem druckbeaufschlagten Behälter (14), dessen Innendruck bei einem absoluten Druckwert eingestellt und gehalten wird, mit einem Wert P₀, der nicht kleiner als der Außendruck (P_{EST}) und mindestens ausreichend ist, um die Druckverluste ΔP_{2A}, ΔP_{2B},... ΔP_{2N} auszugleichen, die entlang der erwähnten Abgabeleitungen (L_{A}, L_{B}, L_{c} .. L_{N}) erzeugt werden, und um mindestens teilweise eine mögliche piezometrische Differenz (ΔP₁) zwischen dem Eintritt des reaktionsfähigen Gemisches in den Infusionshohlraum (8) und dem Sammelbeutel (12) auszugleichen,
g) Überwachen und Erfassen des Drucks im Inneren jedes Verbindungs- und Abgabeelements (10) durch die jeweiligen Drucksensoren (11) und
h) Erzeugen eines gesteuerten Druckabfalls durch Drosseln, in einer gesteuerten und wechselseitig unabhängigen Weise, der Abgabeleitungen (L_{A}, L_{B}, L_{c} .. L_{N}) auf der Basis der Signale der entsprechenden Drucksensoren (11), um den entsprechenden Zustrom von reaktionsfähigem Gemisch in einer Weise zu verringern, die zu einem absoluten Druckanstieg im Inneren der entsprechenden Verbindungs- und Abgabeelemente (10) proportional ist, um eine Druckdifferenz zwischen der Außenseite und der Innenseite des Infusionshohlraums (8) im Abgabepunkt aufrechtzuerhalten, sodass der absolute Druck in diesen Abgabepunkten einen voreingestellten zulässigen Maximalwert, der niedriger ist als der Außendruck (P_{EST}), der auf das Sperrschichtelement (6;80) wirkt, nicht um einen gewünschten Differentialdruckwert übersteigt.

2. Verfahren nach Anspruch 1, wobei das Sperrschichtelement einen Sperrschichtfilm (6) umfasst, der für Luft und Harze undurchlässig ist, der um seinen Umfang luftdicht mit der Form (4) verbunden ist und an dem die Einlassöffnungen (9) und die Abgabeelemente (10) für das reaktionsfähige Gemisch versehen sind, wobei der Zustrom von reaktionsfähigem Gemisch in einer Weise erhöht und eingestellt ist, die zu einer Erhöhung im absoluten Druck im Inneren entsprechender Verbindungs- und Abgabeelemente (10) proportional ist, um die Druckverluste entlang der Leitungen auszugleichen, um so eine Lösung des Sperrschichtfilms (6) von dem Verstärkungsfaserträger (5) zu verhindern und eine abnormale Ansammlung eines Gemisches unter dem Sperrschichtfilm (6) zu vermeiden.

3. Verfahren nach Anspruch 2, wobei auf der Außenfläche des Sperrschichtfilms (6) ein Außendruck (P_{EST}) erzeugt wird, der größer als der atmosphärische Druck (P_{ATM}) ist.

4. Verfahren nach Anspruch 3, wobei der Außendruck (P_{EST}) durch ein luftdichtes Gehäuse (71) in einem druckbeaufschlagten Zustand erhalten wird, in dessen Inneren die kontrastierende Oberfläche (3), die den Verstärkungsfaserträger (5) trägt, und der Sperrschichtfilm (6) positioniert sind.

5. Verfahren nach Anspruch 1, wobei die Form (4) durch ein Paar von Halbformen (4A, 4B) definiert ist, die reziprok koppelbar sind, und wobei das Sperrschichtelement ein zusammenfaltbares Kernelement (80) umfasst, das angepasst ist, um einen Hohlraum im Inneren des Körpers aus Verbundstoffmaterial zu erhalten, wobei die Einlassöffnungen (9) für das Harz auf dem Paar Halbformen (4A,4B) erhalten werden.

6. Verfahren nach Anspruch 5, wobei das zusammenfaltbare Kernelement (80) aus flexiblem Material besteht und mit Luft oder Gas aufgeblasen wird, um als entfernbare interne Gegenform zu dienen, um einen Hohlkörper in einem einzigen Stück zu erhalten.

7. Verfahren nach einem der vorstehenden Ansprüche, wobei, durch eine Steuereinheit (C.U.), die mit einer geschlossenen Regelschleife (28) konfiguriert ist, eine Einstellung der Teilströmungsraten der Reaktionspartnerkomponenten und folglich der Gesamtströmungsrate (Q) zum Mischkopf (13) versehen ist, um den Sammelbeutel (12) flexibel in einem gewünschten Füllzustand bei einem voreingestellten Volumen oder Gewicht zu halten.

8. Verfahren nach einem der vorstehenden Ansprüche, wobei der Druckbeaufschlagungsbehälter (14) mit Druckluft bei einem Druck beaufschlagt ist, der nicht geringer als der Außendruck (P_{EST}) ist, der auf das Sperrschichtelement (6;80) wirkt, wobei der Druck in dem Druckbeaufschlagungsbehälter (14) durch eine Regelschleife (17) und durch ein proportionales pneumatisches Ventil (45) eingestellt wird.

9. Verfahren nach einem vorstehenden Anspruch, wobei der Druck in dem Druckbeaufschlagungsbehälter (14) bei einem Wert gehalten wird, der von 1 Bar absolut bis 5 Bar absolut variieren kann.

10. Verfahren nach einem der vorstehenden Ansprüche, wobei das Gewicht des Behälters (14), der den Sammelbeutel (12) enthält, erfasst und überwacht wird, um, durch eine Differentialeinstellungsschleife (19), die Menge an Reaktionspartnergemisch, die im Sammelbeutel (12) enthalten ist, zu steuern und, und in einer geschlossenen Schleife die Menge von Reaktionspartnergemisch, die durch den Mischkopf (13) an den Sammelbeutel (12) abgegeben wird, einzustellen.

11. Verfahren nach einem der vorstehenden Ansprüche, wobei jede Infusionsleitung (L_{A}, L_{B}, L_{c} .. L_{N}) eine flexible Rohrleitung umfasst und wobei für jede Infusionsleitung (L_{A}, L_{B}, L_{c} .. L_{N}), unabhängig voneinander, eine jeweilige pneumatisch oder elektrisch gesteuerte Drosseleinheit (20; 21) versehen ist, die zum Zusammendrücken von der Außenseite der jeweiligen flexiblen Rohrleitung (L_{A}, L_{B}, L_{c} .. L_{N}) in einer Weise dient, die zum absoluten Druckwert proportional ist, der durch den entsprechenden Drucksensor (11) erfasst wird, um so lokal dem fließenden reaktionsfähigen Gemisch einen gesteuerten hydraulischen Widerstand entgegenzustellen.

12. Verfahren nach Anspruch 11, wobei die Drosseleinheit (20; 21... N), die für einen Betrieb gemäß einem peristaltischen Betriebsprinzip gestaltet ist, wirkt, um den Durchgangsabschnitt in der jeweiligen flexiblen Rohrleitung (L_{A}, L_{B}, L_{c} .. L_{N}) zu verringern, und proportional durch ein elektrisches Stellglied oder durch ein Ventil (29), das ein elektrisches Referenzsignal in pneumatischen Druck umformt, gesteuert wird, und durch ein geschlossenes Regelschleifensystem zum Drosseln so gesteuert wird, dass sie proportional zu der Differenz zwischen dem Druck, der in dem entsprechenden Verbindungs- und Abgabeelement (10) erfasst wird, und einem einstellbaren Schwellenwert ΔP_{Nmax} entsprechend der Differenz zwischen dem Druck außerhalb des Sperrschichtfilms und dem maximalen annehmbaren Druck unter dem entsprechenden Verbindungs- und Abgabeelement (10), zunimmt.

13. Verfahren nach Ansprüchen 2 bis 12, wobei der Sperrschichtfilm (6), der für Luft und Harz undurchlässig ist, um seinen Umfang durch ein doppelseitiges Klebeband oder ein Dichtungskittelement mit einer Umfangszone (7) der Form (4) verbunden ist, die die kontrastierende Oberfläche (3) begrenzt, um so den Infusionshohlraum (8) zu definieren.

14. Verfahren nach einem oder mehreren der vorstehenden Ansprüche, wobei eine visuelle Überprüfung - durch ein optisches System, das funktionsfähig mit der Steuereinheit (CU) durch den transparente Sperrschichtfilm (6) verbunden ist - des Vorrückens des reaktionsfähigen Gemisches im Inneren der Infusionskammer (8) versehen ist, um die Imprägnierungshomogenität zu kontrollieren und selektiv den Gemischstrom einer Infusionsleitung (L_{A}, L_{B}, L_{c} .. L_{N}) zu unterbrechen, wenn die entsprechende, zu imprägnierende Zone vollständig gefüllt ist.

15. Verfahren nach einem der vorstehenden Ansprüche, wobei das reaktionsfähige Gemisch durch Dosieren und Mischen einer Harzkomponente (A) und einer Reaktionspartner- oder Härtungskomponente (B) durch volumetrische Pumpen (30, 31) erhalten wird, deren Strömungsraten in einer geschlossenen Schleife durch einen Strömungsratenmesser, der stromabwärts jeder Pumpe gelegen ist, und eine Befehls- und Steuereinheit gesteuert werden, die das stöchiometrische Verhältnis der Komponenten mit dem Variieren der Menge, die durch den Mischkopf (13) an den flexiblen Sammelbeutel (12) abgegeben wird, entsprechend dem erfassten Gewicht von Reaktionspartnergemisch, das im Sammelbeutel (12) enthalten ist, steuert.

16. Verfahren nach einem der vorstehenden Ansprüche, wobei das reaktionsfähige Gemisch durch Dosieren und Mischen einer Harzkomponente (A) und einer Reaktionspartner- oder Härtungskomponente (B) durch volumetrische Pumpen (30, 31) erhalten wird.

17. Verfahren nach einem der vorstehenden Ansprüche, wobei die Vakuumquelle (15) angetrieben wird, um im Inneren des Infusionshohlraums (8) einen Innendruck (P_{INT}) mit einem Wert zu erzeugen, der von 0 bis 900 Millibar absolut einstellbar ist.

18. Einrichtung zur direkten Infusion unter Vakuumbedingungen eines reaktionsfähigen Gemisches zum Herstellen eines Körpers aus verstärktem Verbundstoffmaterial, umfassend:
- eine Form (4) mit einer kontrastierenden Oberfläche (3), die zum Empfangen einer oder mehrerer Faserschichten geeignet ist, die einen Verstärkungsfaserträger (5) definieren, der mit dem reaktionsfähigen Gemisch imprägniert werden soll,
- ein Sperrschichtelement (6;80), das für Luft und Harz undurchlässig ist, das zum Pressen auf den Verstärkungsfaserträger (5) geeignet ist und zum Begrenzen eines Infusionshohlraums (8) angeordnet ist, der von der Außenumgebung getrennt ist,
- eine oder mehrere Einlassöffnungen (9) zur Abgabe des reaktionsfähigen Gemisches an den Infusionshohlraum (8);
- eine Vakuumquelle (15), die mit dem Infusionshohlraum (8) durch eine oder mehrere Saugleitungen (VL) verbunden werden kann, um im Inneren des Infusionshohlraums (8) einen Innendruck (P_{INT}) unter dem Außendruck (P_{EST}), der auf das Sperrschichtelement (6;80) wirkt, zu erzeugen, um den Strom von reaktionsfähigen Gemisch im Inneren des Infusionshohlraums (8) zu fördern,
- eine Vorrichtung (13, 30, 31) zum Dosieren und Mischen eines Harzes (A) mit einer Reaktionspartner- oder Härtungskomponente (B), um das reaktionsfähige Gemisch zu erhalten,
- einen Sammelbeutel (12) aus flexiblem Material, der zum Empfangen und Beinhalten des reaktionsfähigen Gemisches geeignet ist, das in gesteuerter Weise durch die Dosier- und Mischvorrichtung (13, 30, 31) zugeleitet wird, wobei der Sammelbeutel (12) in einem druckbeaufschlagten Behälter (14) eingeschlossen ist,
- eine oder mehr Infusionsleitungen (L_{A}, L_{B}, L_{c} .. L_{N}), die zum Verbinden des Sammelbeutels (12) mit der Infusionskammer (8) angeordnet sind, zur Abgabe des reaktionsfähigen Gemisches,
- Druckbeaufschlagungsmittel (32), das zum Einstellen und Aufrechterhalten, im Inneren des druckbeaufschlagten Behälters (14), eines Innendrucks bei einem absoluten Druckwert (P₀) gestaltet ist, der nicht geringer als der Außendruck (P_{EST}) ist, der auf das Sperrschichtelement (6;80) wirkt, und mindestens ausreichend ist, um die maximalen Druckverluste (ΔP_{2A}, ΔP_{2B},... ΔP_{2N}) auszugleichen, die entlang der Infusionsleitungen (L_{A}, L_{B}, L_{c} .. L_{N}) und im Inneren des Infusionshohlraums (8) erzeugt werden, und mindestens teilweise eine mögliche piezometrische Kopfdifferenz (ΔP1) zwischen dem Eintritt des reaktionsfähigen Gemisches in den Infusionshohlraum (8) und dem Sammelbeutel (12) auszugleichen,
- ein oder mehrere Verbindungs- und Abgabeelemente (10), die an einem Ende jeder Infusionsleitung (L_{A}, L_{B}, L_{c} .. L_{N}) versehen sind und jeweils an einer jeweiligen Einlassöffnung (9) für das Gemisch positionierbar sind,
- jedes des einen oder der mehreren der Verbindungs- und Abgabeelemente (10) mit einem Drucksensor (11) zum Erfassen und Überwachen des Drucks versehen ist, der unter dem Sperrschichtfilm (6) beim Verbindungs- und Abgabeelement (10) vorhanden ist,
- eine oder mehrere Drosseleinheiten (20, 21), die entlang jeder Infusionsleitung (L_{A}, L_{B}, L_{c} ..L_{N}) positioniert sind und unabhängig voneinander antreibbar sind, um den Durchgang von Gemisch in gesteuerter Weise auf der Basis der Signale der entsprechenden Drucksensoren (11) zu verringern, um eine abnormale Ansammlung von Gemisch unter dem Sperrschichtelement (6;80) zu vermeiden, wenn der absolute Druck in dem entsprechenden Verbindungs- und Abgabeelement (10) steigt und sich einem voreingestellten zulässigen maximalen Wert nähert, der niedriger ist als der Außendruck (P_{EST}), der auf das Sperrschichtelement (6;80) wirkt.

19. Einrichtung nach Anspruch 18, wobei das Sperrschichtelement einen Sperrschichtfilm (6) umfasst, der für Luft und Harz undurchlässig ist und geeignet ist, um den Umfang dichtend mit einer Umfangszone (7) der Form (4) verbunden zu werden, die die kontrastierende Oberfläche (3) begrenzt, wobei die eine oder mehreren Einlassöffnungen (9) für das reaktionsfähige Gemisch auf dem Sperrschichtfilm (6) erhalten werden, und wobei die eine oder mehreren Drosseleinheiten (20, 21) gestaltet sind zum Drosseln des Durchgangs von reaktionsfähigem Gemisch auf der Basis der Signale der entsprechenden Drucksensoren (11), um zu verhindern, dass der Sperrschichtfilm (6) vom Verstärkungsfaserträger (5) gelöst wird, und um eine abnormale Ansammlung von Gemisch unter dem Sperrschichtfilm (6) zu vermeiden.

20. Einrichtung nach Anspruch 18 oder 19, weiter umfassend ein Gehäuse (71) zum Einschließen, in einem dicht gebundenen Volumen (72), der kontrastierenden Oberfläche (3) und des Sperrschichtelements (6), und gestaltet, auf einen Druck (P_{EST}) beaufschlagt zu werden, der höher als der atmosphärische Druck (P_{ATM}) ist, wobei ein Sensor (63) zum Steuern des Drucks in dem Volumen (72) versehen ist.

21. Einrichtung nach Anspruch 18 oder 19, wobei die Form (4) ein Paar von Halbformen (4A, 4B) umfasst, die wechselseitig koppelbar sind, und wobei das Sperrschichtelement ein zusammenfaltbares Kernelement (80) umfasst, das aus flexiblem Material ist und mit Luft oder Gas zusammenfaltbar ist, um als entfernbare innere Gegenform zu dienen, um einen Hohlkörper in einem einzelnen Stück zu erhalten, und wobei die Einlassöffnungen (9) für das Harz an dem Paar von Halbformen (4A,4B) erhalten werden.

22. Einrichtung nach einem der Ansprüche 18 bis 21, umfassend Wägemittel (22), das mit dem druckbeaufschlagten Behälter (14) gekoppelt und zum Überwachen des Gewichts des reaktionsfähigen Gemisches, das im Sammelbeutel (12) enthalten ist, angeordnet ist, wobei ein geschlossenes Regelschleifensystem (19, 28) versehen ist, das in einer Steuereinheit (C.U.) eingeschlossen ist, um die Teilströmungsraten der Reaktionspartnerkomponenten und folglich die Gesamtströmungsrate an den Mischkopf (Q) des reaktionsfähigen Gemisches zu steuern, das zugeleitet wird, um den Sammelbeutel (12) in einem gewünschten Füllzustand bei einem Sollvolumen oder -gewicht zu halten.

23. Einrichtung nach einem der Ansprüche 18 bis 22, umfassend ein Regelschleifensystem (17) und ein proportionales pneumatisches Ventil (45) zum Steuern und Aufrechterhalten es Drucks im Inneren des Druckbeaufschlagungsbehälters (14) durch Druckluftbeaufschlagung bei einem gewünschten Wert von 1 Bar bis 5 Bar absolut,.

24. Einrichtung nach einem der Ansprüche 18 bis 23, wobei jede Infusionsleitung (L_{A}, L_{B}, L_{c} .. L_{N}) eine flexible Rohrleitung umfasst und wobei die Drosseleinheiten (20, 21,.. N) von der pneumatischen oder elektrisch gesteuerten peristaltischen Art sind, die zum Zusammenpressen von außen der jeweiligen flexiblen Rohrleitung (L_{A}, L_{B}, L_{c} .. L_{N}) in einer Weise, die zum absoluten Druckwert, der durch den entsprechenden Drucksensor (11) erfasst wird, proportional ist, geeignet ist, um so lokal dem strömenden reaktionsfähigen Gemisch einen gesteuerten hydraulischen Widerstand entgegenzustellen.

25. Einrichtung nach einem der Ansprüche 18 bis 24, wobei die Drosseleinheiten (20; 21, N) unabhängig voneinander durch ein Steuersystem mit einem proportionalen Regelventil (29), das ein elektrisches Referenzsignal, das aus einem Erfassen durch den entsprechenden Drucksensor (11) abgeleitet wird, in pneumatischen Druck umformt, oder mit einem proportionalen elektrischen Stellglied gesteuert werden, um die jeweilige flexible Rohrleitung (L_{A}, L_{B}, L_{c} .. L_{N}) stärker zu drosseln, je mehr sich der Druck, der im entsprechenden Verbindungs- und Abgabeelement (10) erfasst wird, einem gewünschten eingestellten maximalen Schwellenwert P_{Nfilm} nähert, entsprechend der Differenz ΔP_{Nfilm} zwischen dem Druck außerhalb des Sperrschichtfilms und dem maximalen annehmbaren Druck unter dem Verbindungs- und Abgabeelement.

26. Einrichtung nach einem der Ansprüche 18 bis 25, wobei jede Drosseleinheit einen pneumatischen Zylinder (23) umfasst, der mit einem angelenkten Hebel (24) verbunden ist, versehen mit einem Radpresselement (25), das geeignet ist, von außen einen Drosseldruck auf die entsprechende flexible Rohrleitung (L_{A}, L_{B}, L_{c} .. L_{N}) auszuüben.

27. Einrichtung nach einem der Ansprüche 18 bis 25, wobei jede Drosseleinheit einen pneumatischen Zylinder (26) umfasst, mit dessen Ende ein Druckkeilelement (27) verbunden ist, das geeignet ist, von außen einen Drosseldruck auf die entsprechende flexible Rohrleitung (L_{A}, L_{B}, L_{c} .. L_{N}) auszuüben.

28. Einrichtung nach einem der Ansprüche 18 bis 27, umfassend ein optisches System zum Betrachten, durch den transparenten Sperrschichtfilm (6), des Vorrückens des reaktionsfähigen Gemisches im Inneren der Infusionskammer (8), um die Homogenität einer Imprägnierung und die selektive Unterbrechung des Stroms von Gemisch jeder Infusionsleitung (L_{A}, L_{B}, L_{c} .. L_{N}) zu kontrollieren, wenn die entsprechende, zu imprägnierende Zone vollständig gefüllt ist.

29. Einrichtung nach einem der Ansprüche 18 bis 28, wobei die Dosierungsvorrichtung (30, 31) volumetrische Pumpen (30, 31) zum Dosieren und Zuleiten des Harzes (A) und der Reaktionspartner- oder Härtungskomponente (B) umfasst, deren Strömungsraten in einer geschlossenen Schleife durch Strömungsratenmesser gesteuert werden, die stromabwärts jeder Pumpe gelegen sind, sowie eine Befehls- und Steuereinheit, die das stöchiometrische Verhältnis der Komponenten mit dem Variieren der Gesamtmenge, die durch den Mischkopf (13) an den flexiblen Sammelbeutel (12) abzugeben ist, steuert und aufrechterhält.

30. Einrichtung nach einem der Ansprüche 18 bis 29, wobei die Dosierungsvorrichtung (13, 30, 31) einen Mischkopf (13) und volumetrische Pumpen (30, 31) zum Dosieren und Zuleiten des Harzes (A) und der Reaktionspartner- oder Härtungskomponente (B) umfasst, die in gesteuerter Weise antreibbar sind, um die korrekte Strömungsrate des Mischkopfs (13) gemäß dem erfassten Gewicht von reaktionsfähigem Gemisch einzustellen, das im Sammelbeutel (12) enthalten ist.

## Revendications

1. Procédé de production d'un corps constitué d'un matériau composite renforcé par des fibres par infusion d'un mélange réactif dans des conditions de vide, comprenant les étapes consistant à :
a) agencer une ou plusieurs couches de fibres sur une surface de contraste (3) d'un moule (4) pour définir un support fibreux de renfort (5) destiné à être imprégné dudit mélange réactif,
b) appliquer audit support fibreux de renfort (5) un élément barrière (6 ; 80) qui est imperméable à l'air et aux résines de sorte à délimiter conjointement avec ladite surface de contraste (3) une cavité d'infusion (8) séparée de l'environnement externe et fournir un ou plusieurs orifices d'entrée (9) pour délivrer un mélange réactif à ladite cavité d'infusion (8) ;
c) raccorder ladite cavité d'infusion (8) à une source de vide (15) par une ou plusieurs lignes d'aspiration (VL) pour générer à l'intérieur de ladite cavité d'infusion (8) une pression interne (P_{INT}) qui est inférieure à une pression externe (P_{EST}) agissant sur ledit élément barrière (6 ; 80) de manière à maintenir ledit élément barrière (6 ; 80) adhérant audit support fibreux de renfort (5) et de promouvoir l'écoulement de mélange réactif dans ladite cavité d'infusion (8),
d) positionner, à chaque orifice d'entrée (9) pour le mélange réactif, un élément de fourniture (10) pour fournir de la résine réactive, lequel élément de fourniture (10) est pourvu d'un capteur de pression (11) et
e) raccorder chaque élément de fourniture (10) pour la résine réactive à un conduit de fourniture respectif (L_{A}, L_{B}, L_{C} .. L_{N}) à un sachet d'accumulation (12) constitué d'un matériau souple qui est alimenté en mélange réactif de manière commandée par une unité de dosage de résine pourvue d'une tête de mélange (13),
f) enserrer ledit sachet d'accumulation (12) dans un récipient sous pression (14), dont la pression interne est ajustée et maintenue à une valeur de pression absolue ayant une valeur P₀ qui n'est pas inférieure à ladite pression externe (P_{EST}) et au moins suffisante pour compenser les pertes de pression ΔP_{2A}, ΔP_{2B}, ... ΔP_{2N} qui sont générées le long des conduits de fourniture précités (L_{A}, L_{B}, L_{C} .. L_{N}) et compenser au moins en partie une différence piézométrique possible (ΔP₁) entre l'entrée du mélange réactif dans ladite cavité d'infusion (8) et ledit sachet d'accumulation (12),
g) surveiller et détecter la pression à l'intérieur de chaque élément de liaison et de fourniture (10) par les capteurs de pression respectifs (11) et
h) générer une chute de pression commandée par étranglement de manière commandée et mutuellement indépendante des conduits de fourniture (L_{A}, L_{B}, L_{C} .. L_{N}) sur la base de signaux des capteurs de pression correspondants (11) pour réduire l'afflux correspondant de mélange réactif d'une manière qui est proportionnelle à une augmentation de la pression absolue à l'intérieur des éléments de liaison et de fourniture correspondants (10), pour maintenir une différence de pression entre l'extérieur et l'intérieur de la cavité d'infusion (8) au point de fourniture de sorte que la pression absolue à ces points de fourniture ne dépasse pas, d'une valeur de pression différentielle souhaitée, une valeur maximale admissible préétablie qui est inférieure à ladite pression externe (P_{EST}) agissant sur ledit élément barrière (6 ; 80).

2. Procédé selon la revendication 1, dans lequel ledit élément barrière comprend un film barrière (6), qui est imperméable à l'air et aux résines, qui est raccordé au plan périmétrique de manière étanche à l'air audit moule (4) et sur lesquels lesdits orifices d'entrée (9) et lesdits éléments de fourniture (10) sont prévus pour le mélange réactif, dans lequel l'afflux de mélange réactif est augmenté et ajusté d'une manière qui est proportionnelle à une augmentation de la pression absolue à l'intérieur d'éléments de liaison et de fourniture correspondants (10), compensant les pertes de pression le long des conduits, de manière à empêcher un détachement dudit film barrière (6) dudit support fibreux de renfort (5) et éviter une accumulation anormale de mélange en dessous du film barrière (6).

3. Procédé selon la revendication 2, dans lequel une pression externe (P_{EST}) qui est supérieure à la pression atmosphérique (P_{ATM}) est générée sur la surface externe dudit film barrière (6)

4. Procédé selon la revendication 3, dans lequel ladite pression externe (P_{EST}) est obtenue par un carter étanche à l'air (71) dans un état sous pression, à l'intérieur duquel ladite surface de contraste (3) supportant ledit support fibreux de renfort (5) et ledit film barrière (6) sont positionnés.

5. Procédé selon la revendication 1, dans lequel ledit moule (4) est défini par une paire de demi-moules (4A, 4B) qui peuvent être couplés l'un à l'autre et dans lequel ledit élément barrière comprend un élément central repliable (80) conformé pour obtenir une cavité à l'intérieur dudit corps constitué d'un matériau composite, dans lequel lesdits orifices d'entrée (9) pour la résine sont obtenus sur ladite paire de demi-moules (4A,4B).

6. Procédé selon la revendication 5, dans lequel ledit élément central repliable (80) est constitué d'un matériau souple et est gonflé à l'air ou avec un gaz de manière à agir comme un contre-moule interne amovible pour obtenir un corps creux d'une seule pièce.

7. Procédé selon l'une quelconque des revendications précédentes, dans lequel il est prévu, via une unité de commande (C.U.) configurée avec une commande à boucle fermée (28), d'ajuster les débits partiels des composants réactifs et, en conséquence, le débit total (Q) à la tête de mélange (13) de manière à maintenir ledit sachet d'accumulation (12) souple dans un état de remplissage souhaité à un volume ou à un poids préétabli.

8. Procédé selon l'une quelconque des revendications précédentes, dans lequel ledit récipient sous pression (14) est mis sous pression avec de l'air comprimé à une pression qui n'est pas inférieure à la pression externe (P_{EST}) agissant sur ledit élément barrière (6 ; 80), la pression dans ledit récipient sous pression (14) étant ajustée par une boucle de commande (17) et une soupape pneumatique proportionnelle (45).

9. Procédé selon l'une quelconque des revendications précédentes, dans lequel la pression dans ledit récipient sous pression (14) est maintenue à une valeur qui peut varier de 1 bar absolu à 5 bars absolus.

10. Procédé selon l'une quelconque des revendications précédentes, dans lequel le poids est détecté et surveillé dans ledit récipient (14) contenant ledit sachet d'accumulation (12) pour commander, par une boucle d'ajustement différentielle (19), la quantité de mélange réactif contenue dans ledit sachet d'accumulation (12) et ajuster dans une boucle fermée la quantité de mélange réactif distribuée par ladite tête de mélange (13) audit sachet collecteur (12).

11. Procédé selon l'une quelconque des revendications précédentes, dans lequel chaque ligne d'infusion (L_{A}, L_{B}, L_{C} .. L_{N}) comprend un conduit tubulaire souple et dans lequel il est prévu, pour chaque ligne d'infusion (L_{A}, L_{B}, L_{C} .. L_{N}) indépendamment l'une de l'autre, une unité d'étranglement respective commandée par voie pneumatique ou électrique (20 ; 21) agissant pour écraser de l'extérieur le conduit tubulaire souple respectif (L_{A}, L_{B}, L_{C} .. L_{N}) d'une manière qui est proportionnelle à la valeur de pression absolue détectée par le capteur de pression correspondant (11) de manière à opposer localement une résistance hydraulique commandée au mélange réactif en circulation.

12. Procédé selon la revendication 11, dans lequel ladite unité d'étranglement (20 ; 21... N), configurée pour opérer selon un principe de fonctionnement péristaltique agit de manière à réduire la section de passage dans le conduit tubulaire souple respectif (L_{A}, L_{B}, L_{C} .. L_{N}) et est commandée de manière proportionnelle par un actionneur électrique ou une soupape (29) qui transforme un signal de référence électrique en pression pneumatique et est commandée par un système de commande à boucle fermée pour assurer un étranglement d'une manière qui augmente en proportion de la différence entre la pression détectée dans l'élément de liaison et de fourniture correspondant (10) et une valeur de seuil réglable ΔP_{Nmax} correspondant à la différence entre la pression à l'extérieur du film barrière et la pression acceptable maximale en dessous de l'élément de liaison et de fourniture correspondant (10).

13. Procédé selon les revendications 2 à 12, dans lequel ledit film barrière (6) qui est imperméable à l'air et à la résine est raccordé de manière périmétrique par un ruban d'étanchéité bi-adhésif ou un élément en mastic d'étanchéité jusqu'à une zone périmétrique (7) dudit moule (4) délimitant ladite surface de contraste (3) de manière à définir ladite cavité d'infusion (8).

14. Procédé selon une ou plusieurs revendications précédentes, dans lequel il est prévu une inspection visuelle - par un système optique connecté en service à l'unité de commande (CU) à travers ledit film barrière transparent (6) - de l'avancement du mélange réactif dans ladite chambre d'infusion (8) pour commander l'homogénéité d'imprégnation et interrompre sélectivement l'écoulement du mélange d'une ligne d'infusion (L_{A}, L_{B}, L_{C} .. L_{N}) lorsque la zone correspondante à imprégner est complètement remplie.

15. Procédé selon l'une quelconque des revendications précédentes, dans lequel ledit mélange réactif est obtenu par dosage et mélange d'un composant de résine (A) et d'un composant de réactif ou durcisseur (B) par des pompes volumétriques (30, 31), dont les débits sont commandés dans une boucle fermée par un débitmètre situé en aval de chaque pompe et une unité de commande et de réglage qui commande et régule le rapport stoechiométrique des composants avec la variation de la quantité à distribuer à travers la tête de mélange (13) au sachet d'accumulation souple (12) selon le poids détecté du mélange réactif contenu dans ledit sachet d'accumulation (12).

16. Procédé selon l'une quelconque des revendications précédentes, dans lequel ledit mélange réactif est obtenu par dosage et mélange d'un composant de résine (A) et d'un composant de réactif ou durcisseur (B) par des pompes volumétriques (30, 31).

17. Procédé selon l'une quelconque des revendications précédentes, dans lequel ladite source de vide (15) est actionnée pour générer à l'intérieur de ladite cavité d'infusion (8) une pression interne (P_{INT}) ayant une valeur qui peut être réglée de 0 à 900 millibars absolus.

18. Appareil d'infusion directe dans des conditions de vide d'un mélange réactif pour produire un corps constitué d'un matériau composite renforcé, comprenant :
- un moule (4) ayant une surface de contraste (3) qui convient pour recevoir une ou plusieurs couches de fibres définissant un support fibreux de renfort (5) destiné à être imprégné dudit mélange réactif,
- un élément barrière (6; 80) qui est imperméable à l'air et à la résine et qui convient pour presser sur ledit support fibreux de renfort (5) et agencé pour délimiter une cavité d'infusion (8) qui est séparée de l'environnement externe,
- un ou plusieurs orifices d'entrée (9) pour fournir ledit mélange réactif à ladite cavité d'infusion (8) ;
- une source de vide (15) qui peut être raccordée à ladite cavité d'infusion (8) par une ou plusieurs lignes d'aspiration (VL) afin de générer à l'intérieur de ladite cavité d'infusion (8) une pression interne (P_{INT}) en dessous de la pression externe (P_{EST}) agissant sur ledit élément barrière (6 ; 80) pour promouvoir l'écoulement de mélange réactif à l'intérieur de ladite cavité d'infusion (8),
- un dispositif (13, 30, 31) pour doser et mélanger une résine (A) avec un composant de réactif ou durcisseur (B) afin d'obtenir ledit mélange réactif,
- un sachet d'accumulation (12) constitué d'un matériau souple et convenant pour recevoir et contenir le mélange réactif fourni de manière commandée par ledit dispositif de dosage et de mélange (13, 30, 31), ledit sachet d'accumulation (12) étant enserré dans un récipient sous pression (14),
- une ou plusieurs lignes d'infusion (L_{A}, L_{B}, L_{C} .. L_{N}) agencées pour raccorder ledit sachet d'accumulation (12) à ladite chambre d'infusion (8) afin de fournir ledit mélange réactif,
- des moyens de mise sous pression (32) configurés pour ajuster et maintenir, à l'intérieur dudit récipient sous pression (14), une pression interne à une valeur de pression absolue (P₀) qui n'est pas inférieure à la pression externe (P_{EST}) agissant sur ledit élément barrière (6 ; 80) et au moins suffisante pour compenser les pertes de pression maximales (ΔP_{2A}, ΔP_{2B}, ... ΔP_{2N}) qui sont générées le long desdites lignes d'infusion (L_{A}, L_{B}, L_{C} .. L_{N}) et à l'intérieur de ladite cavité d'infusion (8), et compensant au moins en partie une différence de tête piézométrique possible (ΔP1) entre l'entrée du mélange réactif dans ladite cavité d'infusion (8) et ledit sachet d'accumulation (12),
- un ou plusieurs éléments de liaison et de fourniture (10) disposés à une extrémité de chaque ligne d'infusion (L_{A}, L_{B}, L_{C} .. L_{N}) et chacun positionnable sur un orifice d'entrée respectif (9) pour le mélange,
- chacun desdits un ou plusieurs éléments de liaison et de fourniture (10) étant pourvu d'un capteur de pression (11) pour détecter et surveiller la pression présente en dessous du film barrière (6) au niveau de l'élément de liaison et de fourniture (10),
- une ou plusieurs unités d'étranglement (20, 21) positionnées le long de chaque ligne d'infusion (L_{A}, L_{B}, L_{C} .. L_{N}) et qui peuvent être actionnées indépendamment l'une de l'autre afin de réduire le passage du mélange de manière commandée sur la base des signaux des capteurs de pression correspondants (11) afin d'éviter une accumulation anormale du mélange en dessous dudit élément barrière (6; 80) lorsque la pression absolue dans l'élément de liaison et de fourniture correspondant (10) augmente et se rapproche d'une valeur maximale autorisée préétablie qui est inférieure à ladite pression externe (P_{EST}) agissant sur ledit élément barrière (6 ; 80).

19. Appareil selon la revendication 18, dans lequel ledit élément barrière comprend un film barrière (6) qui est imperméable à l'air et à la résine et convient pour être relié de manière étanche et périmétrique à une zone périmétrique (7) dudit moule (4) qui délimite ladite surface de contact (3), dans lequel lesdits un ou plusieurs orifices d'entrée (9) pour le mélange réactif sont obtenus sur ledit film barrière (6) et dans lequel lesdites une ou plusieurs unités d'étranglement (20, 21) sont configurées pour étrangler le passage du mélange réactif sur la base des signaux des capteurs de pression correspondants (11) afin d'éviter que ledit film barrière (6) se détache dudit support fibreux de renfort (5) et éviter une accumulation anormale de mélange en dessous du film barrière (6).

20. Appareil selon la revendication 18 ou 19, comprenant en outre un carter (71) pour enserrer, dans un volume délimité de manière étanche (72), ladite surface de contraste (3) et ledit élément barrière (6) et configuré pour être mis sous pression à une pression (P_{EST}) qui est supérieure à la pression atmosphérique (P_{ATM}), un capteur (63) étant prévu pour commander la pression dans ledit volume (72).

21. Appareil selon la revendication 18 ou 19, dans lequel ledit moule (4) comprend une paire de demi-moules (4A, 4B) qui peuvent être couplés l'un à l'autre et dans lequel ledit élément barrière comprend un élément central pliable (80) qui est constitué d'un matériau souple et peut se replier à l'air ou avec un gaz afin d'agir comme contre-moule interne amovible afin d'obtenir un corps creux d'une seule pièce et dans lequel lesdits orifices d'entrée (9) pour la résine sont obtenus sur ladite paire de demi-moules (4A,4B).

22. Appareil selon l'une quelconque des revendications 18 à 21, comprenant des moyens de pesage (22) couplés audit récipient sous pression (14) et agencés pour surveiller le poids du mélange réactif contenu dans ledit sachet d'accumulation (12), un système de commande à boucle fermée (19, 28) y étant prévu, inclus dans une unité de commande (C.U.), pour commander les débits partiels des composés réactifs et, en conséquence, le débit total de la tête de mélange (Q) du mélange réactif fourni afin de maintenir ledit sachet d'accumulation (12) dans un état de remplissage souhaité pour un volume ou un poids établi.

23. Appareil selon l'une quelconque des revendications 18 à 22, comprenant un système de boucle de commande (17) et une soupape pneumatique proportionnelle (45) pour commander et maintenir à une valeur souhaitée de 1 bar à 5 bars absolus la pression à l'intérieur dudit récipient de mise sous pression (14) par mise sous pression à l'air comprimé.

24. Appareil selon l'une quelconque des revendications 18 à 23, dans lequel chaque ligne d'infusion (L_{A}, L_{B}, L_{C} .. L_{N}) comprend un conduit tubulaire souple et dans lequel lesdites unités d'étranglement (20, 21,.. N) sont de type péristaltique commandé de manière pneumatique ou électrique, configurées pour presser de l'extérieur sur le conduit tubulaire souple respectif (L_{A}, L_{B}, L_{C} .. L_{N}) d'une manière qui est proportionnelle à la valeur de pression absolue détectée par le capteur de pression correspondant (11) de manière à opposer localement une résistance hydraulique commandée au mélange réactif en circulation.

25. Appareil selon l'une quelconque des revendications 18 à 24, dans lequel lesdites unités d'étranglement (20; 21, N) sont commandées indépendamment l'une de l'autre par un système de commande avec une soupape de commande proportionnelle (29) qui transforme un signal électrique de référence, en partant de la détection par le capteur de pression correspondant (11), en pression pneumatique ou avec un actionneur électrique proportionnel de manière à étrangler le conduit tubulaire souple respectif (L_{A}, L_{B}, L_{C} .. L_{N}) plus la pression détectée dans l'élément de liaison et de fourniture correspondant (10) se rapproche d'un seuil maximal établi souhaité P_{Nfilm} correspondant à la différence ΔP_{Nfilm} entre la pression à l'extérieur du film barrière et la pression acceptable maximale en dessous de l'élément de liaison et de fourniture.

26. Appareil selon l'une quelconque des revendications 18 à 25, dans lequel chaque unité d'étranglement comprend un cylindre pneumatique (23) raccordé à un levier articulé (24) pourvu d'un élément de pression de roue (25) convenant pour exercer de l'extérieur une pression d'étranglement sur le conduit tubulaire souple correspondant (L_{A}, L_{B}, L_{C} .. L_{N}).

27. Appareil selon l'une quelconque des revendications 18 à 25, dans lequel chaque unité d'étranglement comprend un cylindre pneumatique (26) à l'extrémité duquel un élément de calage de pression (27) est raccordé, qui convient pour exercer de l'extérieur une pression d'étranglement sur le conduit tubulaire souple correspondant (L_{A}, L_{B}, L_{C} .. L_{N}).

28. Appareil selon l'une quelconque des revendications 18 à 27, comprenant un système optique pour observer, à travers ledit film barrière transparent (6), l'avancement du mélange réactif à l'intérieur de ladite chambre d'infusion (8) pour commander l'homogénéité d'imprégnation et l'interruption sélective du flux de mélange de chaque ligne d'infusion (L_{A}, L_{B}, L_{C} .. L_{N}) lorsque la zone correspondante à imprégner est complètement remplie.

29. Appareil selon l'une quelconque des revendications 18 à 28, dans lequel ledit dispositif de dosage (30, 31) comprend des pompes volumétriques (30, 31) pour le dosage et l'alimentation de ladite résine (A) et dudit composant de réactif ou durcisseur (B), dont les débits sont commandés dans une boucle fermée par les débitmètres situés en aval de chaque pompe et une unité de commande et de régulation qui commande et maintient le rapport stoechiométrique des composants avec la variation de la quantité totale à distribuer à travers la tête de mélange (13) au sachet d'accumulation souple (12).

30. Appareil selon l'une quelconque des revendications 18 à 29, dans lequel ledit dispositif de dosage (13, 30, 31) comprend une tête de mélange (13) et des pompes volumétriques (30, 31) pour doser et fournir ladite résine (A) et ledit composant de réactif ou durcisseur (B) qui peuvent être acheminés de manière commandée pour ajuster le débit correct de la tête de mélange (13) selon le poids détecté de mélange réactif contenu dans ledit sachet d'accumulation (12).
